# EUROPEAN PATENT APPLICATION

(11) **EP 4 769 338 A1**
(43) Date of publication of application: **01.07.2026**
(21) Application number: 24223185.0
(22) Date of filing: 24.12.2024
(51) Int. Cl.: G06V 20/52, G06V 40/20

(54) **SKELETAL FEATURE BASED IDENTIFICATION**

(71) Applicant: Realsense, Inc., Cupertino, CA 95014 (US)
(72) Inventor: HOROVITZ, Dan, 7578229 Rishon Letzion (IL); ANDIAPPAN, Rajasekaran, 10620 Raseborg (FI); GUR, Amit, 4069600 Ein Vered (IL); VITZRABIN, Efraim, Kiryat Uno (IL)
(74) Representative: ABG Intellectual Property Law, S.L.

(57) **Abstract**

A device may include: an interface configured to receive data from a plurality of deployed autonomous machines within a detection environment and a processor configured to: determine skeletal features of individual persons detected from multiple fields of view within the detection environment based on the data; identify at least one individual of the individual persons based on the skeletal features and reference skeletal data representing three-dimensional skeletal representations; instruct at least one deployed autonomous machine of the plurality of deployed autonomous machines to perform an action associated with an identified individual based on the identification.

## Description

### Technical Field

This disclosure generally relates to methods and devices for skeletal feature based identification.

### Background

In modern operations of various kinds, the deployment of autonomous vehicles such as autonomous mobile robots (AMRs), autonomous forklifts, and other robotic platforms into a designated environment has become increasingly common. These autonomous systems can be widely utilized in specific detection environments, such as warehouses, factories, and construction sites and may often be equipped with advanced sensing technologies such as RGB cameras, LiDAR sensors, stereo vision systems, and 3D imaging devices, to enable them to navigate efficiently, detect objects, and interact with their surroundings. Such environments may require monitoring of both objects and persons to ensure seamless operations and safety. For example, in a warehouse, AMRs may autonomously transport goods, navigate through aisles, and assist with inventory checks. Similarly, in factories, autonomous forklifts or robotic systems handle material delivery, manage assembly line tasks, and monitor workflow to optimize production.

While autonomous platforms may manage predefined tasks, their integration into environments where human operators are also present can introduce challenges. These environments are inherently dynamic, with people and objects moving through the same areas as autonomous vehicles. Identifying and tracking individual persons, especially in real time, can become crucial to ensuring safety, operational efficiency, and security. For example, person identification may allow deployed vehicles to avoid collisions, maintain safe navigation paths, and recognize authorized personnel. Accurate tracking can further facilitate smooth collaboration between human operators and robotic systems, supporting tasks such as shared material handling, inspection, and monitoring. In restricted areas of facilities, person identification systems may contribute to security protocols by enabling the recognition of unauthorized personnel or monitoring human activity for compliance.

Traditional systems for person identification and tracking in industrial environments often rely on stationary cameras, manual monitoring, or isolated detection methods. Fixed camera systems, for instance, are typically mounted at static positions and calibrated to monitor predefined zones. These systems can observe movement and track activity within their limited fields of view. However, such fixed systems may not be adaptable to dynamic scenarios where individual persons and autonomous vehicles are in motion.

### Brief Description of the Drawings

In the drawings, like reference characters generally refer to the same parts throughout the different views. The drawings are not necessarily to scale, emphasis instead generally being placed upon illustrating the principles of the disclosure. In the following description, various aspects of the disclosure are described with reference to the following drawings, in which:
FIG. 1 shows an example of an autonomous machine;
FIG. 2 shows various exemplary electronic components of a machine;
FIG. 3 shows an exemplary illustration of an environment including autonomous or automated machines;
FIG. 4 shows an illustrative example of a system including a device;
FIG. 5 shows an example of a flow diagram in accordance with various aspects described herein;
FIG. 6 shows illustrates a block representation of a system in accordance with various aspects described herein;
FIG. 7 shows schematically an example of a processor and a memory to implement an AI/ML, model;
FIG. 8 shows an example of a method.

### Description

The following detailed description refers to the accompanying drawings that show, by way of illustration, exemplary details and aspects in which aspects of the present disclosure may be practiced.

Aspects described herein may pertain to the domain of autonomous platforms and technologies, with a focus on person detection and dynamic tracking through feature extraction from multiple points of view, which may include methodologies and apparatuses for identifying, tracking, and analyzing individual persons within dynamic and complex environments using deployed autonomous vehicles.

In modern dynamic environments, accurately identifying and tracking a person, particularly when both the individual person and the AMRs are in motion, remains a significant challenge. Current autonomous systems may exhibit limitations in their ability to integrate 3D data in real-time effectively, identify individual persons within diverse and rapidly changing scenarios, and utilize collaborative mechanisms among multiple autonomous units. The inability to achieve seamless person tracking with high precision and efficiency leads can to reduced system effectiveness in applications requiring rapid decision-making and movement, such as security, logistics, and surveillance.

Existing solutions can offer capabilities for motion capture and analysis. However, these systems may typically rely on static camera arrays in controlled environments. For instance, such solutions may capture gait-based (i.e. musculoskeletal movement pattern-based) data using a single fixed camera to track a subject in a predefined space. Such solutions, while valuable in constrained setups, may have certain issues addressing the demands of dynamic multi-agent systems operating in real-world, unstructured settings. Conventional multi-camera tracking technologies generally operate with fixed cameras whose spatial configuration and relative positioning are predetermined. These setups may be capable of providing tracking functionality within their predefined coverage areas. However, the static nature of the system can limit their applicability in scenarios requiring mobility, adaptability, and real-time collaboration among tracking agents.

The reliance on static geometry can also constrain the ability to extract comprehensive data from varying perspectives or adapt to changing environmental conditions. Furthermore, these systems may include aspects towards musculoskeletal movement pattern-based analysis as the sole feature extraction mechanism, which may be insufficient for identifying individual persons in scenarios where clothing, posture, or musculoskeletal movement pattern variations reduce effectiveness. Identifying and isolating a specific individual person among multiple moving subjects in real-time may remain a challenge.

Various aspects are described herein to enable a robust and scalable device that is capable of identifying and tracking individual persons within a dynamic environment. Aspects described herein may be configured to overcome existing limitations by leveraging multiple mobile platforms equipped with RGB, 2D, and 3D cameras, which may enable the collection and integration of 3D skeletal patterns, volume, and texture data across diverse perspectives. This may address the need for real-time identification and tracking, enhancing security and operational efficiency across various applications. Through advancements in real-time skeletal data analysis, 3D data integration, and autonomous collaboration, aspects described herein may be desirable to improve tracking and identification in this context, which may further, through dynamic and collaborative tracking capabilities, extend its applicability to complex, unstructured, and detection environments of any kind.

For instance, in a large industrial facility where workers wear identical uniforms, it may be difficult to differentiate individual persons based on clothing or general physical features. Aspects described herein may employ the autonomous mobile robots to collaborate and extract skeletal and musculoskeletal movement pattern data to uniquely identify individual persons based on their distinct 3D skeletal patterns and motion. This may ensure that the correct worker can be tracked and approached, even in the presence of similar-looking individual persons. Another example may include high-security environments, such as airports, where it is important to identify and monitor specific individual persons from a crowd. Aspects described herein may allow for dynamic tracking across multiple zones by capturing and analyzing data from multiple mobile and moving platforms to ensure that individual persons of interest are continuously monitored even as they traverse through complex environments with high foot traffic.

In addition to security applications, aspects described herein may also be suitable for use in large-scale event management scenarios. For example, during a crowded event, aspects described herein can assist in locating specific individual persons. The integration of multi-point-of-view feature extraction may allow for accurate tracking in environments where traditional camera systems would struggle due to overlapping fields of view and crowd density. Furthermore, aspects described herein may enable collaborative data integration among multiple autonomous mobile robots, resulting in enhanced accuracy of individual person identification and location determination. By utilizing multiple moving cameras and sensors, the system may be capable of capturing the necessary data even in dynamically changing environments. For example, in search-and-rescue operations, aspects described herein may be used to identify and track survivors in debris-filled zones, where visibility is limited and static camera systems are ineffective.

The apparatuses and methods of this disclosure may utilize or be related to radio communication technologies. While some examples may refer to specific radio communication technologies, the examples provided herein may be similarly applied to various other radio communication technologies, both existing and not yet formulated, particularly in cases where such radio communication technologies share similar features as disclosed regarding the following examples. Various exemplary radio communication technologies that the apparatuses and methods described herein may utilize include, but are not limited to: a Global System for Mobile Communications ("GSM") radio communication technology, a General Packet Radio Service ("GPRS") radio communication technology, an Enhanced Data Rates for GSM Evolution ("EDGE") radio communication technology, and/or a Third Generation Partnership Project ("3GPP") radio communication technology, for example Universal Mobile Telecommunications System ("UMTS"), Freedom of Multimedia Access ("FOMA"), 3GPP Long Term Evolution ("LTE"), 3GPP Long Term Evolution Advanced ("LTE Advanced"), Code division multiple access 2000 ("CDMA2000"), Cellular Digital Packet Data ("CDPD"), Mobitex, Third Generation (3G), Circuit Switched Data ("CSD"), High-Speed Circuit-Switched Data ("HSCSD"), Universal Mobile Telecommunications System ("Third Generation") ("UMTS (3G)"), Wideband Code Division Multiple Access (Universal Mobile Telecommunications System) ("W-CDMA (UMTS)"), High Speed Packet Access ("HSPA"), High-Speed Downlink Packet Access ("HSDPA"), High-Speed Uplink Packet Access ("HSUPA"), High Speed Packet Access Plus ("HSPA+"), Universal Mobile Telecommunications System-Time-Division Duplex ("UMTS-TDD"), Time Division-Code Division Multiple Access ("TD-CDMA"), Time Division-Synchronous Code Division Multiple Access ("TD-CDMA"), 3rd Generation Partnership Project Release 8 (Pre-4th Generation) ("3GPP Rel. 8 (Pre-4G)"), 3GPP Rel. 9 (3rd Generation Partnership Project Release 9), 3GPP Rel. 10 (3rd Generation Partnership Project Release 10) , 3GPP Rel. 11 (3rd Generation Partnership Project Release 11), 3GPP Rel. 12 (3rd Generation Partnership Project Release 12), 3GPP Rel. 13 (3rd Generation Partnership Project Release 13), 3GPP Rel. 14 (3rd Generation Partnership Project Release 14), 3GPP Rel. 15 (3rd Generation Partnership Project Release 15), 3GPP Rel. 16 (3rd Generation Partnership Project Release 16), 3GPP Rel. 17 (3rd Generation Partnership Project Release 17), 3GPP Rel. 18 (3rd Generation Partnership Project Release 18), 3GPP 5G, 3GPP LTE Extra, LTE-Advanced Pro, LTE Licensed-Assisted Access ("LAA"), MuLTEfire, UMTS Terrestrial Radio Access ("UTRA"), Evolved UMTS Terrestrial Radio Access ("E-UTRA"), Long Term Evolution Advanced (4th Generation) ("LTE Advanced (4G)"), cdmaOne ("2G"), Code division multiple access 2000 (Third generation) ("CDMA2000 (3G)"), Evolution-Data Optimized or Evolution-Data Only ("EV-DO"), Advanced Mobile Phone System (1st Generation) ("AMPS (1G)"), Total Access Communication arrangement/Extended Total Access Communication arrangement ("TACS/ETACS"), Digital AMPS (2nd Generation) ("D-AMPS (2G)"), Push-to-talk ("PTT"), Mobile Telephone System ("MTS"), Improved Mobile Telephone System ("IMTS"), Advanced Mobile Telephone System ("AMTS"), OLT (Norwegian for Offentlig Landmobil Telefoni, Public Land Mobile Telephony), MTD (Swedish abbreviation for Mobiltelefonisystem D, or Mobile telephony system D), Public Automated Land Mobile ("Autotel/PALM"), ARP (Finnish for Autoradiopuhelin, "car radio phone"), NMT (Nordic Mobile Telephony), High capacity version of NTT (Nippon Telegraph and Telephone) ("Hicap"), Cellular Digital Packet Data ("CDPD"), Mobitex, DataTAC, Integrated Digital Enhanced Network ("iDEN"), Personal Digital Cellular ("PDC"), Circuit Switched Data ("CSD"), Personal Handy-phone System ("PHS"), Wideband Integrated Digital Enhanced Network ("WiDEN"), iBurst, Unlicensed Mobile Access ("UMA"), also referred to as also referred to as 3GPP Generic Access Network, or GAN standard), Zigbee, Bluetooth^{®}, Wireless Gigabit Alliance ("WiGig") standard, mmWave standards in general (wireless systems operating at 10-300 GHz and above such as WiGig, IEEE 802.11ad, IEEE 802.11ay, etc.), technologies operating above 300 GHz and THz bands, (3GPP/LTE based or IEEE 802.11p and other) Vehicle-to-Vehicle ("V2V") and Vehicle-to-X ("V2X") and Vehicle-to-Infrastructure ("V2I") and Infrastructure-to-Vehicle ("12V") communication technologies, 3GPP cellular V2X, DSRC (Dedicated Short Range Communications) communication arrangements such as Intelligent-Transport-Systems, and other existing, developing, or future radio communication technologies.

The apparatuses and methods described herein may use such radio communication technologies according to various spectrum management schemes, including, but not limited to, dedicated licensed spectrum, unlicensed spectrum, (licensed) shared spectrum (such as LSA = Licensed Shared Access in 2.3-2.4 GHz, 3.4-3.6 GHz, 3.6-3.8 GHz and further frequencies and SAS = Spectrum Access System in 3.55-3.7 GHz and further frequencies), and may use various spectrum bands including, but not limited to, IMT (International Mobile Telecommunications) spectrum (including 450-470 MHz, 790-960 MHz, 1710-2025 MHz, 2110-2200 MHz, 2300-2400 MHz, 2500-2690 MHz, 698-790 MHz, 610-790 MHz, 3400-3600 MHz, etc., where some bands may be limited to specific region(s) and/or countries), IMT-advanced spectrum, IMT-2020 spectrum (expected to include 3600-3800 MHz, 3.5 GHz bands, 700 MHz bands, bands within the 24.25-86 GHz range, etc.), spectrum made available under FCC's "Spectrum Frontier" 5G initiative (including 27.5-28.35 GHz, 29.1-29.25 GHz, 31-31.3 GHz, 37-38.6 GHz, 38.6-40 GHz, 42-42.5 GHz, 57-64 GHz, 64-71 GHz, 71-76 GHz, 81-86 GHz and 92-94 GHz, etc.), the ITS (Intelligent Transport Systems) band of 5.9 GHz (typically 5.85-5.925 GHz) and 63-64 GHz, bands currently allocated to WiGig such as WiGig Band 1 (57.24-59.40 GHz), WiGig Band 2 (59.40-61.56 GHz) and WiGig Band 3 (61.56-63.72 GHz) and WiGig Band 4 (63.72-65.88 GHz), the 70.2 GHz-71 GHz band, any band between 65.88 GHz and 71 GHz, bands currently allocated to automotive radar applications such as 76-81 GHz, and future bands including 94-300 GHz and above. Furthermore, the apparatuses and methods described herein can also employ radio communication technologies on a secondary basis on bands such as the TV White Space bands (typically below 790 MHz) where e.g. the 400 MHz and 700 MHz bands are prospective candidates. Besides cellular applications, specific applications for vertical markets may be addressed such as PMSE (Program Making and Special Events), medical, health, surgery, automotive, low-latency, drones, etc. applications. Furthermore, the apparatuses and methods described herein may also use radio communication technologies with a hierarchical application, such as by introducing a hierarchical prioritization of usage for different types of users (e.g., low/medium/high priority, etc.), based on a prioritized access to the spectrum e.g., with highest priority to tier-1 users, followed by tier-2, then tier-3, etc. users, etc. The apparatuses and methods described herein can also use radio communication technologies with different Single Carrier or OFDM flavors (CP-OFDM, SC-FDMA, SC-OFDM, filter bank-based multicarrier (FBMC), OFDMA, etc.) and e.g. 3GPP NR (New Radio), which can include allocating the OFDM carrier data bit vectors to the corresponding symbol resources.

For purposes of this disclosure, radio communication technologies may be classified as one of a Short Range radio communication technology or Cellular Wide Area radio communication technology. Short Range radio communication technologies may include Bluetooth, WLAN (e.g., according to any IEEE 802.11 standard), and other similar radio communication technologies. Cellular Wide Area radio communication technologies may include Global System for Mobile Communications ("GSM"), Code Division Multiple Access 2000 ("CDMA2000"), Universal Mobile Telecommunications System ("UMTS"), Long Term Evolution ("LTE"), General Packet Radio Service ("GPRS"), Evolution-Data Optimized ("EV-DO"), Enhanced Data Rates for GSM Evolution ("EDGE"), High Speed Packet Access (HSPA; including High Speed Downlink Packet Access ("HSDPA"), High Speed Uplink Packet Access ("HSUPA"), HSDPA Plus ("HSDPA+"), and HSUPA Plus ("HSUPA+")), Worldwide Interoperability for Microwave Access ("WiMax") (e.g., according to an IEEE 802.16 radio communication standard, e.g., WiMax fixed or WiMax mobile), etc., and other similar radio communication technologies. Cellular Wide Area radio communication technologies also include "small cells" of such technologies, such as microcells, femtocells, and picocells. Cellular Wide Area radio communication technologies may be generally referred to herein as "cellular" communication technologies.

Unless explicitly specified, the term "transmit" encompasses both direct (point-to-point) and indirect transmission (via one or more intermediary points). Similarly, the term "receive" encompasses both direct and indirect reception. Furthermore, the terms "transmit", "receive", "communicate", and other similar terms encompass both physical transmission (e.g., the transmission of radio signals) and logical transmission (e.g., the transmission of digital data over a logical software-level connection). For example, a processor or controller may transmit or receive data over a software-level connection with another processor or controller in the form of radio signals, where the physical transmission and reception is handled by radio-layer components such as RF transceivers and antennas, and the logical transmission and reception over the software-level connection is performed by the processors or controllers. The term "communicate" encompasses one or both of transmitting and receiving, i.e. unidirectional or bidirectional communication in one or both of the incoming and outgoing directions. The term "calculate" encompass both 'direct' calculations via a mathematical expression/formula/relationship and 'indirect' calculations via lookup or hash tables and other array indexing or searching operations. The term "channel state information" is used herein to refer generally to the wireless channel for a wireless transmission between one or more transmitting antennas and one or more receiving antennas and may take into account any factors that affect a wireless transmission such as, but not limited to, path loss, interference, and/or blockage.

A "machine" may be understood to include any type of mechanical structure that uses (e.g., electrical) power to alter its environment, to apply forces, to control movement, and/or to perform an intended action, e.g., a mechanical structure programmable by a computer. By way of example, a machine may be a driven object with a combustion engine, a reaction engine, an electrically driven object, a hybrid driven object, or a combination thereof. A machine may be or may include a humanoid machine, a non-humanoid machine, an agricultural machine, a machine tool, a moving machine, a stationary machine, a drone, an industrial machine, a medical operating machine, a collectively operating machine, a ground machine, an aerial machine, an aquatic machine, or a mixture thereof, among others.

The term "automated machine" as used herein (also referred to as an at least partially autonomous machine or as a robot) may describe a machine capable of managing one or more tasks (also referred to as task performance) at least partially without human intervention, input, and/or control. Examples of automated machines may include a hybrid machine, a human assisted machine, and/or an autonomous machine.

The term "autonomous machine" as used herein (also referred to as autonomous robot) may describe a (e.g., automated) machine capable of managing one or more tasks (also referred to as task performance) without human intervention, input, and/or control. Exemplary components of managing task may include: managing one or more physical tasks (also referred to as task management), planning the task performance, organizing the task performance, scheduling the task performance, switching between two tasks, competing for one or more task, assigning one or more tasks, completing one or more tasks, reporting about completion of the one or more tasks, negotiation of the allocation of one or more tasks (e.g., between multiple autonomous machines), monitoring the progress of one or more tasks, navigate the autonomous machine to one or more positions of one or more tasks (e.g., at which the one or more task require a physical manipulation), etc.

References made herein to robots or automated machines (e.g. AMRs) may be understood as exemplarily and may analogously apply to any type of autonomous machine, and vice versa. References made herein with regard to one or more autonomous machines may analogously apply to one or more automated machines.

According to various aspects, automated machines may perform tasks which have been managed by task management. The task management may be collaborative, e.g., when multiple robots are allocated to one or more tasks. Automated machines implementing the collaborative task management may be configured to exchange data related to the task management.

The task performance may include processing one or more workpieces, e.g., by adding material to the workpiece, removing material from the workpiece, transforming the workpiece, moving the workpiece, picking up the workpiece, putting down the work piece, and the like. The autonomous machine may implement one or more task performance models, e.g., a respective controller of the autonomous machine may implement the one or more task performance models. A task performance model may be configured to control the task performance by the autonomous machine based on input data, e.g., to convert the input data into control instructions. The controller may be configured to transmit the control instructions within the autonomous machine, e.g., in accordance with an in-machine communication protocol (e.g., a fieldbus communication protocol) and/or to one or more actuators of the autonomous machine. Generally, a task performance model may be (e.g., at least in part) rule based and/or may be (e.g., at least in part) based on machine learning.

In accordance with various aspects, a task performance model may operate based on a policy. The task performance model may control the task performance by the autonomous machine based on the policy. The policy may include any type of information that may provide a guidance, which can be at various levels, to the task performance model to manage the one or more tasks. The policy may include a set of rules in a rule-based task performance model. The policy may include machine learning policies in a machine-learning based task performance model. The policy may include one or more parameters (e.g.) that cannot be adjusted. The policy may include one or more adjustable parameters. In accordance with various aspects of this disclosure, the task performance may be optimized by adjusting the one or more adjustable parameters (which may be referred to as policy parameters in this disclosure). In accordance with various aspects of this disclosure, an automated machine may provide various task performances based on various policies.

Examples of the input data may include: data that one or more of the sensors of the autonomous machine sensed, data that the autonomous machine stores (e.g., in a database), data indicating instructions provided to the autonomous machine (e.g., data that an operator or a group leader receives), data about an affiliation of the autonomous machine to a group (also referred to as group affiliation), data about an assignment of the autonomous machine to one or more tasks of the group, data exchanged between multiple autonomous machines (e.g., data transmitted from another autonomous machine of the group), and/or data about a task (also referred to as task data). The control instructions may be understood as in-machine instructions to control one or more actuators of the autonomous machine. Examples of the one or more actuators of the autonomous machine may include: one or more actuators configured to cause a motion of the autonomous machine, one or more actuators configured to actuate a tool of the autonomous machine, one or more actuators configured to move the tool (also referred to as effector) of the autonomous machine (e.g., relative to the one or more actuators configured to cause a motion of the autonomous machine), one or more actuators being part of the kinetic chain (e.g., a robotic arm) of the autonomous machine.

Performing one or more tasks may include one or more actions of the autonomous machine, e.g., one or more spatially distributed actions (e.g., a spatial sequence of actions) and/or one or more spatially chronological actions (e.g., in a chronologic sequence of operations). The spatial distribution of multiple actions (also referred to as machine actions) may indicate, where (i.e., with which spatial relation) and/or in which direction the autonomous machine provides the one or more actions, i.e. in which corresponding spatial position (i.e. position and/or orientation) the autonomous machine or its tool is located.

The one or more tasks may be represented (e.g., logically) by data (also referred to as task data). A task may refer to one task or a group of multiple tasks, which are related to each other, e.g., contextually or logically related to each other (for example, tasks directed to the fabrication of a certain product, tasks directed to the exploration of a certain are, and the like). The task data may be a formal representation of the task. Examples of the task data may include: data identifying each task (also referred to as task identifier), data organizing each task (e.g., spatial and/or chronological data), data indicating the criteria under which a task is fulfilled, data indicating goals of each task, data identifying criteria for triggering, terminating, or maintaining a task, etc.

Furthermore, the task data may include a task logic, which logically links tasks, priorities, criteria, conditions, and/or tasks and/or which implements a sequence (e.g., a flow chart), according to which the task is executed. For example, the task logic may organize the task hierarchically, e.g., into hierarchical levels, hierarchical groups, subtasks, and the like. For example, a task may include multiple subtasks on a lower hierarchical level, which may be, but not need to be, prioritized, contextual based, and/or conditional. Viewed from the hierarchical level of the subtask, the subtask may also be referred to as task, and may include, but not need to include, multiple subtasks. For example, the task logic may organize the task in accordance with conditional aspects and/or contextual aspects. For example, the task logic may define conditional tasks, e.g., by defining conditions/requirements to be fulfilled for starting a task performance and/or for ending a task performance.

Herein the term "collaborate", "collaborative", "collaboration" refers to entities, such as devices (a plurality of autonomous machines), methods and functions, as examples, participating to accomplish a task. Examples of the collaborative entities may include various types of agents or actors, such as automated machines (e.g., partially of fully autonomous machines), humans, non-automated machines, or non-autonomous machines. Multiple entities (e.g., autonomous machines) participating in the task may be affiliated (e.g., assigned) to a group (herein also referred to as group, swarm, team, or as a cluster), e.g., being members (also referred to as agents or as nodes) of the group. Multiple autonomous machines participating in the task may be affiliated (e.g., assigned) to a group (e.g. cluster) of autonomous machines (herein also referred to as group, swarm, team or cluster), e.g., being members (also referred to as agents or as nodes) of the group of autonomous machines. Each group (e.g., of autonomous machines) may be entrusted with one or more tasks.

References made herein with respect to a group of autonomous machines may analogously apply to a group of entities, e.g., including various types of agents or actors, such as automated machines (e.g., partially of fully autonomous machines), humans, non-automated machines, or non-autonomous machines. The autonomous machine may be configured to collaborate with one or more other autonomous machine, e.g., by implementing one or more protocols (also referred to as collaboration protocols). Examples of collaboration protocols may include: a protocol for group management (also referred to as group management protocol), a protocol for communication (e.g., data exchange) between members of a group of collaborating autonomous machines (also referred to as group communication protocol), a protocol for managing tasks (also referred to as task management protocol).

Generally, a protocol may define rules that indicate the format, syntax, semantics and/or synchronization of information, e.g., of information transfer (e.g., exchange), information storage, information processing, and the like. For example, the autonomous machine may form, join and/or leave a group in accordance with the group management protocol. For example, the autonomous machine may be configured to communicate with other members of the group in accordance with the group communication protocol. For example, the autonomous machine may be configured to exchange sensed data or exchange model data with other members of the group in accordance with the group communication protocol (also referred to as data exchange protocol). For example, a group identifier used to route a message generated in accordance with the group communication protocol to the group.

The automated machine may be configured to broadcast the message to all members of the group, and/or a member identifier or topical filter may route the message to individual person members of the group. For example, the autonomous machine may be configured to manage the task performance in accordance with the task management protocol, e.g., synchronizing task data and/or the status (e.g., the progress and/or accomplishment) of one or more tasks.

Various aspects herein may utilize one or more machine learning models to perform or control functions of the machine (or other functions described herein). The term "model" used herein may be understood as any kind of algorithm, which provides output data based on input data provided to the model (e.g., any kind of algorithm generating or calculating output data based on input data). The model may, in an example, refer to an artificial intelligence and/or machine learning model. A computing system may execute a machine learning model to progressively improve the performance of a specific task. In some aspects, parameters of a machine learning model may be adjusted during a training phase based on training data. A trained machine learning model may be used during an inference phase to make estimations or decisions based on input data. In some aspects, the trained machine learning model may be used to generate additional training data. An additional machine learning model may be adjusted during a second training phase based on the generated additional training data. A trained additional machine learning model may be used during an inference phase to make estimations or decisions based on input data.

The machine learning models described herein may take any suitable form or utilize any suitable technique (e.g., for training purposes). For example, any of the machine learning models may utilize supervised learning, semi-supervised learning, unsupervised learning, or reinforcement learning techniques.

In supervised learning, the model may be built using a training set of data including both the inputs and the corresponding desired outputs (illustratively, each input may be associated with a desired or expected output for that input). Each training instance may include one or more inputs and a desired output. Training may include iterating through training instances and using an objective function to teach the model to estimate the output for new inputs (illustratively, for inputs not included in the training set). In semi-supervised learning, a portion of the inputs in the training set may be missing the respective desired outputs (e.g., one or more inputs may not be associated with any desired or expected output).

In unsupervised learning, the model may be built from a training set of data including only inputs and no desired outputs. The unsupervised model may be used to find structure in the data (e.g., grouping or clustering of data points), illustratively, by discovering patterns in the data. Techniques that may be implemented in an unsupervised learning model may include, e.g., self-organizing maps, nearest-neighbor mapping, k-means clustering, and singular value decomposition.

Reinforcement learning models may include positive feedback (also referred to as reward) or negative feedback to improve accuracy. A reinforcement learning model may attempt to maximize one or more objectives/rewards. Techniques that may be implemented in a reinforcement learning model may include, e.g., Q-learning, temporal difference (TD), and deep adversarial networks.

Various aspects described herein may utilize one or more classification models. In a classification model, the outputs may be restricted to a limited set of values (e.g., one or more classes). The classification model may output a class for an input set of one or more input values. An input set may include sensor data, such as image data, radar data, LIDAR data, and the like. A classification model as described herein may, for example, classify environmental conditions, such as weather conditions and the like. References herein to classification models may contemplate a model that implements, e.g., any one or more of the following techniques: linear classifiers (e.g., logistic regression or naive Bayes classifier), support vector machines, decision trees, boosted trees, random forest, neural networks, or nearest neighbor.

The term "sensor data" may indicate the respective information of interest about the environmental property. The sensor data may include various types of information about the environment of the sensor, which are based on the sensing process that the sensor performs, e.g., a result thereof. According to various aspects, the sensor data may include information about one or more logic, geometric, kinematic, mechanical, radiometric (e.g., photometric), thermodynamically, electrical and/or chemical properties of the environment of the sensor, which are based on the sensing process that the sensor performs, e.g., on a result thereof. This is reflected by the type of the sensor data, which may be a logical type, geometrical type, kinematical type, mechanical type, radiometrical type (e.g., photometric type), thermodynamical type, electrical type and/or chemical type.

The term "result" with regard to a sensing process (also referred to as sensing result or as result of the sensing process) may refer to an interim stage of data that the sensing chain processes and/or to the sensor data as output of the processing chain. Examples of the sensing result may include: sensor raw data, an aggregation of raw data, pre-processed (e.g., filtered and/or converted) raw data, a quantized result of processing the sensor raw data, e.g., including numerical information about the sensed property (e.g., one or more values of the sensed property), a classified result of processing the sensor raw data, an estimation made based on the raw data (e.g., output of a model), etc. Examples of the result of an image acquisition as sensing process, may include pixel raw data, the image data based on the raw data, a video, the result of an object recognition based on the image data, a spectral composition, a light intensity value, a distance determined based on the image data, etc.

Various aspects described herein may utilize one or more regression models. A regression model may output a numerical value from a continuous range based on an input set of one or more values (illustratively, starting from or using an input set of one or more values). References herein to regression models may contemplate a model that implements, e.g., any one or more of the following techniques (or other suitable techniques): linear regression, decision trees, random forest, or neural networks.

For example, the controller of an autonomous machine may be configured to train the task performance model based on training data. The training data may include the control instructions, a result of the task performance (also referred to as an actual result), and/or a predefined result (also referred to as expected result or target result). For example, the controller may be configured to determine the result of the task performance by sensing the environment of the machine. For example, the predefined result may represent an optimum result or a range of results that are acceptable. Said more generally, the training data may indicate whether the result of the task performance fulfills a predefined criterion, e.g., by comparing the actual result with the predefined result. For example, the criterion may be fulfilled when a deviation of the actual result from the predefined result is zero.

Generally, the actual result and/or the predefined result may be parameterized, e.g., represented by data (also referred to as result data) including one or more parameters as information about the result. For example, the result data may include sensed parameters, such as physical, electrical and/or chemical properties of the result.

Throughout the present disclosure, the following terms may be used as synonyms: parameter set, model parameter set, safety layer parameter set, automated motion model parameter set, policy parameters, and/or the like. These terms may correspond to groups of values used to implement one or more models for directing an autonomous machine or a group of autonomous machines to operate according to the manners described herein. Furthermore, throughout the present disclosure, the following terms may be used as synonyms: parameter, model parameter, safety layer parameter, and/or automated movement model parameter, a policy parameter, and/or the like, and may correspond to specific values within the previously described sets.

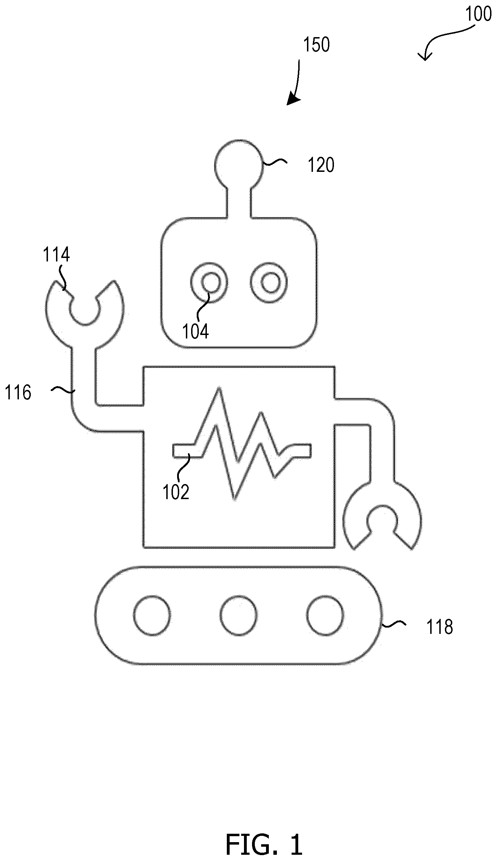

FIG. 1 shows an example of an autonomous machine 150 in accordance with various aspects 100 of the present disclosure. In some aspects, the machine 150 may include one or more processors 102; one or more sensors 104; one or more effectors 114; one or more kinetic chains 116 (e.g., holding an effector); one or more propulsion devices 118; and/or one or more communication devices 120.

A sensor (also referred to as detector) may be understood as a transducer that is configured to qualitatively or quantitatively sense a property of its environment (also referred to as environmental property) corresponding to the sensor type, e.g., a geometric, kinematic, mechanical, radiometric (e.g., photometric), thermodynamically, electrical and/or chemical property. The sensed quantity is the physical quantity, to which a sensing process using the sensor is directed. Depending on the complexity of the sensor's environment to be sensed, the sensor may be configured to distinguish only between two states of the sensed quantity or to distinguish between more than two states of the sensed quantity. A sensor may be part of a specific processing chain (also referred to as sensing chain), which includes a corresponding infrastructure (e.g., including processor, storage medium, and/or bus system or the like).

The sensing chain may be configured to operate the corresponding sensor (e.g., water sensor, pressure sensor, and/or actuation sensor), to process its sensed quantity as input, and to provide a sensor data as output, which represents the input. According to various aspects, the one or more processors 102 (e.g., being components of a controller) may be configured to implement at least a part of the sensing chain. It is noted that the sensing chain may optionally include (e.g., wireless and/or wired) data exchange, e.g., between various nodes of a network-based sensing chain. For example, the sensing chain may be configured to output the sensing result via an electrical signal (also referred to as sensor signal) or communicate the sensing result (e.g., wirelessly and/or via wire) to another component of the sensing chain or to a further communication device (e.g., of a further autonomous machine, a controlling entity).

According to various aspects, the sensing result (also referred to as sensor data) may include sensor raw data, quantized information about the sensed property (e.g., one or more values of the sensed property), or a result of processing the information about the sensed property and/or the sensor raw data. For example, the result of an image acquisition as exemplarily sensing process, may include pixel raw data, the image data based on the raw data, the result of an object recognition based on the image data, a spectral composition, a light intensity value, a distance determined based on the image data, etc. The result of the sensing process may include various types of information about an environment of the sensor, which is based on the sensing process that the sensor may perform. According to various aspects, the result of the sensing process may include information about one or more logic, geometric, kinematic, mechanical, radiometric (e.g., photometric), thermodynamically, electrical, and/or chemical properties of the environment of the sensor, which are determined based on the sensing process that the sensor may perform. Analogously, the type of information may be a logic type, geometric type, kinematic type, mechanical type, radiometric type (e.g., photometric type), thermodynamic type, electric type, and/or chemical type.

According to various aspects, the sensing chain (e.g., the one or more processors 102) may be configured to obtain the same sensing result by sensing various environmental properties, and/or various sensors may be configured to obtain the same sensing result. For example, the sensing chain (e.g., the one or more processors 102) may be configured to determine a distance of the autonomous machine from an object based on a radar sensor, a LIDAR sensor, or also by processing image data from a camera, e.g., stereographic image data. For example, the sensing chain (e.g., the one or more processors 102) may be configured to determine a temperature based on a resistive temperature sensor or based on a radiometric sensor, e.g., based on a spectral composition that the radiometric sensor sensed.

Generally, each sensor 104 may be configured to sense an actual condition (also referred to as actual state), e.g., the condition at the point of time of the sensing process. Examples of the one or more sensors 104 may be configured to sense the actual condition of the machine 150 (also referred to as operational condition), wherein other examples of the one or more sensors 104 may be configured to sense the actual condition of the environment of the machine 150 (also referred to as environmental condition), e.g., to which the one or more sensors 104 are exposed.

Examples of sensing the actual condition of the machine 150 may include: sensing the temperature of the machine 150, sensing the position of an effector, sensing the position of one or more nodes of the kinetic chain 116, sensing the position and/or orientation of the machine 150, sensing the speed of the machine, sensing an operation and/or status of the effector, e.g., sensing a force that the effector may generate, sensing a fluid flow that the effector may generate, generating an electrical power output that the effector may generate. Examples of sensing the environmental condition of the machine 150 may include: sensing an object in the vicinity of the machine 150, e.g., one or more properties of the object; sensing a progress of the task performance; sensing radiation in the vicinity of the machine 150, e.g., electromagnetic radiation or particle radiation; sensing sound/acoustics. Examples of the object may include: the workpiece that machine 150 may process, a human, another machine; a fluid, a gas, a solid. Examples of the properties of the object may include: a distance of the object from the machine; a position of the object; a temperature of the object; a texture of the object; a chemical composition of the object; a movement of the object; etc.

Examples of the one or more sensors 104 include one or more optoelectronic sensors 105 (e.g., providing one or more image acquisition devices), one or more position sensors 106, one or more speed sensors, one or more distance sensors 108, e.g., one or more radar sensors and/or one or more LIDAR sensors, one or more temperature sensors 110, one or more force sensors 112.

Examples of the one or more propulsion devices 118 may include one or more ground propulsion devices 118, one or more water propulsion devices 118, and/or one or more air propulsion devices 118. Exemplary components of a propulsion device 118 may include one or more motors; one or more rollers; one or more tires; one or more continuous tracks; one or more propellers; and the like. Exemplary components of a communication device 120 may include one or more (e.g., wireless and/or wired) transceivers 208, 210, 212; one or more antennas (also referred to as antenna system); one or more amplifiers, one or more filters, one or more modulators, one or more demodulators, one or more baseband-processors, one or more signal processors, one or more memories.

Optionally, one or more components of the autonomous machine 150 may be configured exchangeable (also referred to as exchangeable components). The autonomous machine may be configured to unmount an exchangeable component and mount a further exchangeable component in place of the unmounted component (also referred to as self-change process). For example, at least one effector of the autonomous machine 150 may be configured to as exchangeable component. In this case, the kinetic chain 116 holding the effector may be configured to release (e.g., unmount) the effector and mount another effector (also referred to as change tools).

As outlined below in more detail, the one or more processors 102 may be configured to generate one or more messages in accordance with a (e.g., wireless and/or wired) communication protocol and provide the generated one or more messages to the one or more communication devices 120. The one or more communication devices 120 may be configured to send the one or more messages in accordance with a (e.g., wireless and/or wired) communication protocol. Analogously, the one or more communication devices 120 may be configured to receive one or more messages in accordance with a (e.g., wireless and/or wired) communication protocol and provide the received one or more messages to the one or more processors 102. The one or more processors 102 may be configured to process the one or more messages.

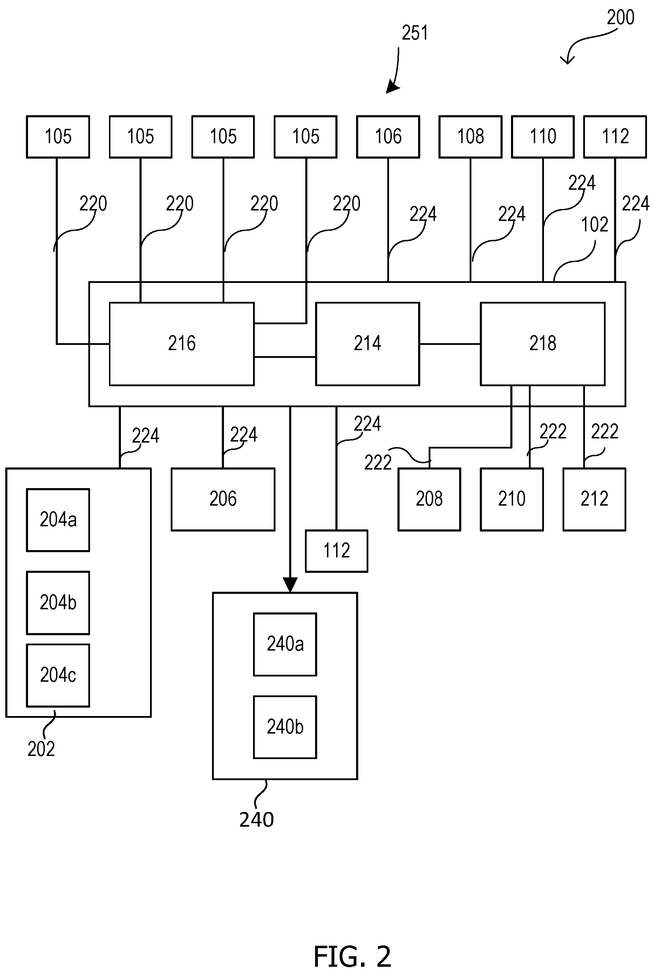

In some aspects, the machine 150 may include a control system 251 (as described with respect to FIG. 2 below). It is appreciated that machine 150 and control system 251 are exemplary in nature and may thus be simplified for explanatory purposes. Locations of elements and relational distances (as discussed above, the figures are not to scale) are provided as examples and are not limited thereto. The control system 251 may include various components depending on the requirements of a particular implementation.

FIG. 2 shows various exemplary electronic components of a machine, namely control system 251, in accordance with various aspects 200 of the present disclosure. In some aspects, the control system 251 may include one or more processors 102, one or more image acquisition devices 105 (e.g., one or more cameras), one or more position sensors 106 (e.g., a Global Navigation Satellite System (GNSS), a Global Positioning System (GPS), among others) one or more distance sensors 108, e.g., one or more radar sensors and/or one or more LIDAR sensors, one or more temperature sensors 110, one or more force sensors 112. According to at least one aspect, control system 251 may further include one or more memories 202, one or more map databases 204a, one or more task databases 204b, one or more models 204c, one or more input/output interfaces 206 (e.g., user interfaces), and/or one or more (e.g., wireless and/or wired) transceivers 208, 210, 212. Exemplary components of the one or more input/output interfaces 206 include one or more displays, one or more touch screens, one or more microphones, one or more loudspeakers, one or more buttons, and/or switches, etc.

The (e.g., wireless and/or wired) transceivers 208, 210, 212 may, in some aspects, be configured according to the same, different, or any combination thereof radio communication protocols or standards. By way of example, a (e.g., wireless and/or wired) transceiver (e.g., a first wireless transceiver 208) may be configured in accordance with a Short Range mobile radio communication standard (e.g., Bluetooth, Zigbee, among others). As another example, a (e.g., wireless and/or wired) transceiver (e.g., a second wireless transceiver 210) may be configured in accordance with a Medium or Wide Range mobile radio communication standard (e.g., 3G (e.g., Universal Mobile Telecommunications System - UMTS), 4G (e.g., Long Term Evolution - LTE), and/or 5G mobile radio communication standard in accordance with corresponding 3GPP (3rd Generation Partnership Project) standards, among others). As a further example, a (e.g., wireless and/or wired) transceiver (e.g., a third wireless transceiver 212) may be configured in accordance with a Wireless Local Area Network communication protocol or standard (e.g., IEEE 802.11 , 802.11, 802.11a, 802.11b, 802.11g, 802.11n, 802.11p, 802.11-12, 802.11ac, 802.11ad, 802.11ah, among others). The one or more (e.g., wireless and/or wired) transceivers 208, 210, 212 may be configured to transmit signals via the antenna system over an air interface.

In some aspects, the one or more processors 102 may include an application processor 214, an image processor 216, a communication processor 218, a signal processor, and/or any other suitable processing device. Image acquisition device(s) 105 may include any number of image acquisition devices and components depending on the requirements of a particular application. Image acquisition devices 105 may include one or more image capture devices, e.g., cameras, CCDs (charge coupling devices, or any other type of image sensor).

In at least one aspect, the control system 251 may also include one or more data interfaces communicatively connecting the one or more processors 102 to other components of the control system 251. For example, one or more the data interfaces may be configured to exchange data in accordance with a fieldbus communication protocol or another in-machine communication protocol. For example, the one or more data interfaces may include a first data interface, e.g., including any wired and/or (e.g., wireless and/or wired) first link 220 or first links 220 configured to transmit image data that the one or more image acquisition devices 105 acquire to the one or more processors 102 (e.g., to the image processor 216). For example, the one or more data interfaces may include a second data interface, e.g., including any wired and/or (e.g., wireless and/or wired) second link 222 or second links 222 configured to transmit radio transmitted data that the (e.g., wireless and/or wired) transceivers 208, 210, 212 may acquire to the one or more processors 102, e.g., to the communication processor 218. For example, the one or more data interfaces may include a third data interface 224, e.g., including any wired and/or (e.g., wireless and/or wired) third link 224 or third links 224, coupled to the one or more position sensor 106 and/or to the one or more distance sensors 108 and/or to the one or more temperature sensors 110 and/or to the one or more force sensors 112.

Such data transmissions (e.g., exchange) may also include communications (e.g., one-way or two-way) between the machine 150 and one or more other (target) machines in an environment of the machine 150 (e.g., to facilitate coordination of the task performance by, e.g., including the navigation of, the machine 150 in view of or together with other (e.g., target) machines in the environment of the machine 150), or even a broadcast transmission to unspecified recipients in a vicinity of the transmitting machine 150.

In accordance with various aspects of this disclosure, the data transmissions may also include communications between the machine and one or more controlling entities (e.g. the device 400) especially with respect to setting the task performance model (e.g. receiving operation policies, receiving control instructions for deployment, etc.), and provision information with respect to the environment data to be obtained (e.g. transmitting sensor data, or the sensing result).

One or more of the transceivers 208, 210, 212 may be configured to implement the group communication protocol (e.g., including a data exchange protocol, e.g., a wireless data exchange protocol, and/or a wired data exchange protocol), and optionally one or more other communication protocols. In some aspects, the group communication protocol may include a proprietary (e.g., wireless and/or wired) communication protocol or may be a proprietary (e.g., wireless and/or wired) communication protocol. In some aspects, the group communication protocol may be an application layer protocol, e.g., defining the format, syntax, and/or semantics of the load part of a message generated in accordance with a (e.g., wireless and/or wired) communication protocol.

Each processor 214, 216, 218 of the one or more processors 102 may include various types of hardware-based processing devices. Exemplary components of each processor 214, 216, 218 may include: a microprocessor, pre-processors (such as an image preprocessor), graphics processors, a central processing unit (CPU), support circuits, digital signal processors, integrated circuits, memory, or any other types of devices suitable for running applications and for sensor data processing and analysis. In some aspects, each processor 214, 216, 218 may include any type of single or multi-core processor, mobile device microcontroller, central processing unit, etc. These processor types may each include multiple processing units with local memory and instruction sets. Such processors may include video inputs for receiving image data from multiple image sensors and may also include video out capabilities.

Any of the processors 214, 216, 218 disclosed herein may be configured to perform certain functions in accordance with program instructions which may be stored in a memory of the one or more memories 202. In other words, a memory of the one or more memories 202 may store software that, when a processor (e.g., the one or more processors 102) executes, controls the operation of the system, e.g., of the control system 251. A memory of the one or more memories 202 may store one or more databases and image processing software, as well as a trained system, such as a neural network, or a deep neural network, for example. The one or more memories 202 may include any number of random access memories, read-only memories, flash memories, disk drives, optical storage, tape storage, removable storage, and other types of storage.

In some aspects, the control system 251 may further include components such as a speed sensor (e.g., a speedometer) for measuring a speed of the machine 150. The control system may also include one or more accelerometers (either single axis or multiaxis) (not shown) for measuring accelerations of the machine 150 along one or more axes. The control system 251 may further include additional sensors or different sensor types such as an ultrasonic sensor, a thermal sensor, one or more radar sensors 110, one or more LIDAR sensors 112 (which may be integrated in the head lamps of the machine 150), and the like.

The one or more memories 202 may store data, e.g., in a database or in any different format. The one or more processors 102 may be configured to process sensory information (also referred to as sensor data), such as images, radar signals, depth information from LIDAR, temperature values or stereo processing of two or more images) of the environment of the machine 150 together with position information, such as a GPS coordinate, a machine's ego-motion, etc., to determine a current location of the machine 150 relative to the known landmarks, and refine the determination of the machine's location. Certain aspects of this technology may be included in a localization technology such as a mapping and routing model.

The map database 204 may include any type of database storing (digital) map data for the machine 150, e.g., for the control system 251. The map database 204 may include data relating to the position, in a reference coordinate system, of various (e.g., outdoor or indoor) items, including roads, buildings, walls, topographic features (e.g., stairs), geographic features, rooms, points of interest, spatial information of a task, docks, etc. In some aspects, a processor of the one or more processors 102 may download (e.g., some or all) information of the map database 204 over a (e.g., wireless and/or wired) data connection to a communication network (e.g., over a cellular network and/or the Internet, etc.). In some aspects, a processor of the one or more processors 102 may be configured to determine, e.g., form and/or update, (e.g., some or all) information of the map database 204, e.g., based on sensing the environmental condition by the one or more sensors 104. In some aspects, the map database 204 may store a sparse data model including polynomial representations of the environment of the machine 150.

In some aspects, the control system 251 may include a task database. Exemplary components of the task database may include task data, a task list, a task status, a task allocation, achievement parameters, target results, etc. Illustratively, the task database may provide and/or store information about a task of the cluster, to which the machine 150 is affiliated. Some information of the task database (e.g., some task data) may be provided to the machine 150, e.g., one or more other members of the cluster and/or a central task controlling authority may provide the information of the task database. The machine 150 may provide some information of the task database (e.g., some task data), e.g., to one or more other members of the team and/or to a central task controlling authority. The machine 150 may update and/or form some information of the task database (e.g., some task data), e.g., in accordance with a status of the task and/or based on a sensing result of the machine 150.

Furthermore, the control system 251 may include a task performance model 204b, e.g., an automated system may implement the task performance model 204b. By way of example, the control system 251 may include (e.g., as part of the task performance model) a computer implementation of a formal model of the machine or its environment. By way of example, the control system 251 may include (e.g., as part of the task performance model) a safety performance model, a task interpretation model and/or a machine control model. A task performance model may be or include a mathematical model formalizing an interpretation of applicable task performance policies, safety policies, operation policies, task data, etc., e.g., being applicable to autonomous machines. It is noted that one or more of the detailed components of the task performance model may be implemented monolithically or separately from each other, e.g., by separate applications that the one or more processors may execute.

For example, the safety performance model may be configured to achieve, e.g., three goals: first, the interpretation of safety policies should be sound in the sense that it complies with how humans interpret the safety policies; second, the interpretation should lead to a useful task performance, meaning it will lead to an agile task performance rather than an overly-defensive task performance which inevitably would confuse other agents (e.g., humans and/or machines) and will obstruct accomplishing the task and in turn limit the scalability of system deployment; and third, the interpretation should be efficiently verifiable in the sense that it can be rigorously proven that the autonomous machine correctly implements the interpretation of the safety policies. The safety performance model, illustratively, may be or include a mathematical model for safety assurance that enables identification and performance of proper responses to dangerous situations such that self-perpetrated accidents can be avoided.

For example, the task interpretation model may be configured to determine a formal formulation of performance steps the machine may perform, e.g., based on information about one or more tasks allocated to the machine and/or based on the target performance. The conversion may be configured to lead to an efficient task performance and to a result, which meets the target performance as best as possible, e.g., to accomplish the task.

For example, the machine control model may be configured to determine useful actions that the machine may take leading to a useful task performance, e.g., based on the performance steps and/or the model of the machine and/or its environment. For example, the machine control model may generate the control instructions based on a model of the kinetic chain of the machine, the available effectors of the machine, the reachable position of the machine, etc.

The control system 251 may generate data to control or assist to control the engine control unit (ECU) and/or other components of the machine 150 to directly or indirectly control the driving of the machine 150.

In some aspects, the control system 251 may include a driving device 240 configured to drive one or more actuators of the autonomous machine, e.g., one or more actuators of the kinematic chain of the autonomous machine 150 and/or one or more actuators of the one or more propulsion devices 118. For example, the driving device 240 may include one or more amplifiers 240a and/or one or more energy storages 240b. Examples of energy storages 240b may include any storage capable to storing energy (in a certain form, e.g., such as electrically, magnetically, chemically, and the like) and convert the stored energy in electrical power. Examples of the amplifiers 240a may include any voltage-to-voltage converter providing an operation voltage of the one or more actuators based on the electrical supply power and based on a control signal received from the one or more processors 102.

As described above, the machine 150 may include the control system 251 as also described with reference to FIG. 2. The machine 150 may include the one or more processors 102 e.g. integrated with or separate from an engine control unit (ECU) of the machine 150. The control system 251 may in general generate data to control or assist to control the ECU and/or other components of the machine 150 to directly or indirectly control the driving of the machine 150.

Although the following aspects will be described in association with the above detailed models, any other model may be provided in alternative implementations.

The one or more memories 104 may store data, e.g., in a database or in any different format, that may correspond to a map. The map database 204 may include any type of database storing (digital) map data for the machine control system 200. The map database 204 may include data relating to the position, in a reference coordinate system, of physical storage units, physical materials, obstacles, walls, topographic features (e.g., stairs), geographic features, rooms, doors, points of interest, spatial information of a task, docks, etc. within the storage facility. In some aspects, a processor of the one or more processors 102 may download (e.g., some or all) information of the map database 204 over a (e.g., wireless and/or wired) data connection to a communication network (e.g., over a cellular network and/or the Internet, etc.). In some aspects, a processor of the one or more processors 102 may be configured to determine, e.g., form and/or update, (e.g., some or all) information of the map database 204, e.g., based on sensing the environmental condition by the data acquisition devices 112. The map database 204 may include schematics or layouts of the warehouse, specifying the arrangement of physical storage units such as shelves, racks, aisles, storage units, and any other physical structures.

In accordance with various aspects described herein, some of the above-mentioned information about an item may be predefined or predetermined, which may be made through computerized operations or by manual inputs of human operators.

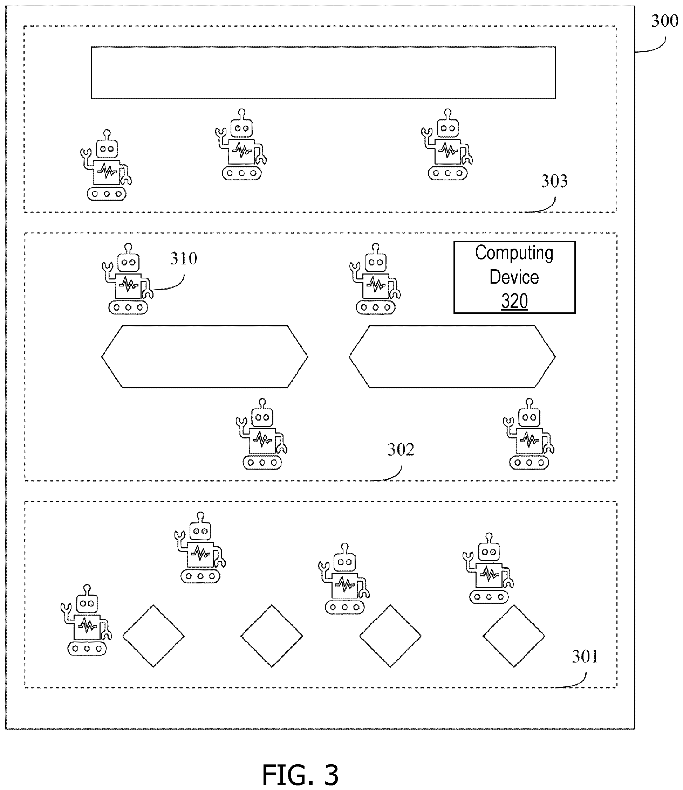

FIG. 3 shows an exemplary illustration of an environment including autonomous or automated machines (as will be referred to as autonomous machines collectively in this disclosure) (e.g. autonomous machine 150) in accordance with various aspects of this disclosure. The environment is depicted as it includes a number of autonomous machines 310. Furthermore, the environment is depicted as it includes a plurality of sections 301, 302, 303, and within each section a cluster of autonomous machines operate to perform a task (i.e. one or more tasks) assigned for the cluster of autonomous machines. In this illustrative example, a first cluster of autonomous machines perform their tasks in a first section 301, a second cluster of autonomous machines perform their tasks in a second section 302, and a third cluster of autonomous machines perform their tasks in a third section 303, however, this is only provided for illustrative purposes, and autonomous machines of each cluster may also be located in other sections or may move to other sections to perform their tasks. Each cluster of autonomous machines may perform an input task based on an operation policy.

Furthermore, a computing device 320 may communicate with each autonomous machine deployed within the environment. The computing device may serve as a central processing unit that is configured to manage and coordinate the autonomous machines 310 across different sections of the environment. This centralized computing architecture may enable efficient data processing, decision-making, and task coordination among autonomous machines. The computing device may incorporate powerful processing units to handle complex data operations from multiple autonomous machines.

The computing device can be implemented through various architectural approaches. For example, in edge computing configurations, data may be processed directly at or near the autonomous machines, minimizing latency for real-time decision-making and reducing bandwidth usage. This approach may be particularly beneficial for time-critical operations requiring immediate response. Fog computing can provide an intermediate layer between edge devices and cloud, offering additional processing power while maintaining relatively low latency. Fog nodes can preprocess and analyze data locally before sending relevant information to central servers, creating an efficient data handling hierarchy. Cloud computing may offer vast storage and processing capabilities for complex analytics and long-term data storage.

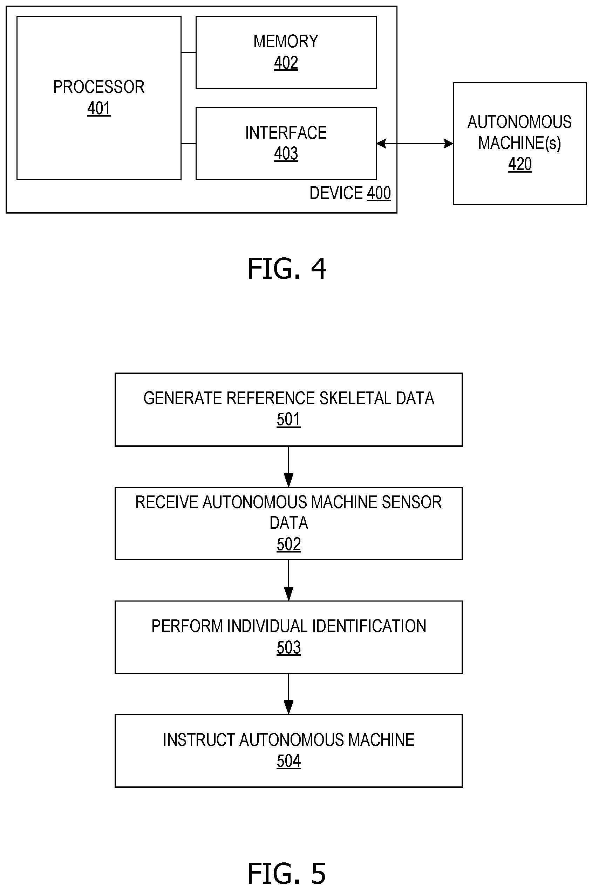

FIG. 4 shows an illustrative example of a system including a device. The device 400 may be suitable for a the computing device 320. The device 400 may include a processor 401 (e.g. the one or more processor 102), a memory 402, and an interface 403. The processor 401 may include one or more processing circuitry. For example, the processor 401 may include a central processing unit (CPU), a graphics processing unit (GPU), a hardware acceleration unit (e.g. one or more dedicated hardware accelerator circuits (e.g., ASICs, FPGAs, and other hardware)), a neuromorphic chip, or the like. The processor 401 may be implemented in one processing unit, e.g. a system on chip (SOC), or a processor. In some examples the processor 401 may include one or more cores as computation units, an arithmetic logic unit, a control unit, a storage unit, a plurality of registers. The processor 401 illustrated herein may include multiple processors, as illustratively described in accordance with FIG. 2.

The processor 401 may perform centralized processing of raw sensor data from autonomous machines 420 (e.g. the autonomous machines 310) included by the system for data management operations. In some examples, the device 400 may receive pre-processed sensor data or sensor data including extracted features with respect to sensing performed by respective sensors. Illustratively, autonomous machines 420 may obtain raw sensor data from their sensors and process the raw sensor data to obtain pre-processed sensor data or sensor data including the extracted features. Furthermore, the processor 401 may handle temporal and spatial synchronization of sensor data to ensure coherent information flow across the system. The processor 401 may dynamically process relevant data regions, to optimize resource utilization while maintaining operational efficiency. Furthermore, the processor 401 may implement algorithms, which may facilitate efficient object tracking and scene analysis to provide comprehensive environmental awareness for the autonomous machines 420.

In some examples, the device 400 may be configured to perform task management. For example, the processor 401 may coordinate tasks across machine clusters through designated management protocols. The processor 401 may continuously analyze operational requirements, distributes workloads based on machine capabilities and availability, monitor task execution in real-time, and/or adjust operations based on feedback.

The processor 401 may implement parallel processing pathways to handle multiple sensor data streams simultaneously. The processor 401 may perform sensor fusion operations, pattern recognition, and environmental mapping tasks. The processor 401 may implement various filtering techniques to remove sensor artifacts and noise while preserving critical information. The processor 401 may further implement adaptive processing strategies that may adjust computational resources based on the complexity of incoming sensor data and current processing demands.

The memory 402 may utilize a hierarchical structure with multiple cache levels to optimize data access patterns specific to sensor processing workflows. The memory 402 may implement predictive caching and intelligent data prefetching based on sensor data patterns. The memory 402 may include dedicated buffers for sensor data streams to enable continuous data ingestion without processing interruptions.

The device 400 may include the interface 403 to receive data. In particular, the interface 403 may receive data generated by a plurality autonomous machines 420 deployed in the environment. For example, received data may include information representative of at least one of sensing, measurement, detection, monitoring performed within the storage facility. For example, received data may include sensor data provided by a variety of sensors, the sensor data representing one or more sensor detections of the interior of the storage facility. Received data may be based on data obtained by data acquisition devices (e.g. data acquisition devices 112) of autonomous machines 420 that are deployed in the environment.

In an example, the interface 403 may be a communication interface (e.g. including RF transceiver 108 and the antenna system 106) to receive sensor data encoded in packets of a communication protocol. In an example, the interface 403 may be designated interfaces couplable to corresponding data acquisition devices. Data transmission between the sensors and the communication system 450 may be carried out via wireless connection (e.g., WLAN, cellular connections). or via a wired connection (e.g., USB connection) through a port (e.g., USB port).

The interface 403 may allow the device 400 to collect data from multiple autonomous machines 420 deployed within a dynamic detection environment. These machines may capture data using a sensor or an array of sensors, including RGB, 2D, and 3D cameras. The processor 401 may process this data to obtain extracted skeletal features of detected individual persons, compare them against reference skeletal data, and identify specific individual persons within the environment who have been detected by sensors of the autonomous machines 420. Once identification is completed, the processor 401 may instruct one or more autonomous machines 420 to perform an associated action, such as tracking, navigation, or interaction.

For example, the interface 403 may receive sensor data from a variety of sources, including deployed autonomous machines 420 in the environment. The received data may represent multiple sensory modalities, such as depth information, point clouds, and RGB images, collected within the detection environment including data of the deployed autonomous machines 420. The interface 403 may support real-time data transmission using wireless protocols, such as Wi-Fi or Bluetooth, or wired connections, depending on environmental constraints.

The interface 403 may facilitate the collection of raw or pre-processed data for the device 400. In an example, autonomous machines 420 may process raw sensor data locally to extract preliminary features, which may reduce the computational burden on the device 400, noting that the extracted features may also be employed by the autonomous machines 420 in their task performance models. Examples of such processing may include spatial segmentation, depth mapping, initial skeletal feature extraction, or full skeletal feature extraction. The interface 403 may incorporate buffering mechanisms to synchronize incoming data streams temporally and spatially. The processor 401 may ensure that received data is correctly formatted and prioritized for processing.

The processor 401 may determine skeletal features of individual persons detected from multiple fields of view within the detection environment. The processor 401 may implement various algorithms, which may cause the processor 401 to analyze sensor data to identify skeletal key points, such as limb positions, joint angles, and body dimensions, for at least one individual person or for each individual person detected in the detection environment. These features may be based on 3D point clouds or depth images captured by the autonomous machines 420.

In some examples, the determination of skeletal features may involve using machine learning models, such as convolutional neural networks, to identify patterns corresponding to human skeletal structures. For instance, the processor 401 may segment the detection environment into regions of interest and analyze movement patterns within those regions to extract dynamic skeletal features, such as musculoskeletal movement pattern and limb motion. For this purpose, the processor 401 may also perform skeletal key point extraction algorithms, provide integration and fusion with multi-modal sensor data of multiple autonomous machines 420.

Further, the processor 401 may identify at least one individual person based on the extracted skeletal features and reference skeletal data that may be stored in the memory 402. The processor 401 may perform the identification by comparing the detected skeletal features with a pre-trained database of reference skeletal data. For example, the reference skeletal data may include three-dimensional representations of individual persons, such as joint coordinates and skeletal proportions. The processor 401 may perform the identification using machine learning techniques, such as classifier models or clustering algorithms, to match detected skeletal features with reference skeletal data. For instance, the processor 401 may train a classifier model with supervised learning by feeding identified skeletal features of individual persons with labels and use the classifier model trained using few-shot learning which may be used to identify individual persons based on limited pre-scan data. For this purpose, the processor 401 may maintain a reference skeletal data database that may be updated during operation and implement feature-matching algorithms. The identified individual's data may be used to generate instructions for autonomous machines 420.

To extract skeletal features, the system first identifies key points on the individual's body using sensor data, such as 3D point clouds or depth maps. Advanced algorithms, such as convolutional neural networks or pose estimation models, analyze this data to detect and map the key points. The spatial and temporal relationships between these key points are then quantified to derive the skeletal features, providing a robust dataset for identification and tracking purposes.

The reference skeletal data may serve as a repository of predefined skeletal attributes used for identifying individual persons within the detection environment. Illustratively, the reference skeletal data may include at least one or a combination of: three-dimensional representations of skeletal structures, such as joint coordinates, limb lengths, body proportions, and spatial relationships between key points. In an example, the processor 401 may generate the reference skeletal data during a pre-scanning phase, where individual persons are analyzed by various sensors (e.g. sensors of autonomous machines 420 deployed for this task) and the processor 401 may record their unique skeletal features, for example in the memory 402. The reference skeletal data may further include temporal information, such as movement patterns or musculoskeletal movement pattern characteristics, captured over time. In addition to spatial and temporal data, the reference skeletal data may further include associated metadata, such as height, estimated body volume, or texture features, enhancing the ability to differentiate between individual persons with similar skeletal profiles. By utilizing this comprehensive dataset, the processor 401 can compare live skeletal data captured from multiple cameras to identify individual persons accurately, even in dynamic environments or when individual persons are partially obscured.

Key points may refer to specific anatomical locations on a skeletal structure that may be used to represent the pose and movement of an individual person in a structured manner. These points may correspond to major joints or significant anatomical markers, such as the head, shoulders, elbows, wrists, hips, knees, and ankles. Each key point may be defined by a set of spatial coordinates, typically in a three-dimensional coordinate system, which describe its position relative to a reference frame. In the context of skeletal analysis, these key points may be interconnected to form a skeletal representation, which may be referred to as a skeleton or stick figure. The relationships between these points, such as the angles between connected joints or the distances between them, may provide information about the posture, orientation, and motion of the individual, and may be used for tasks such as skeletal feature extraction, motion analysis, and person identification, as they can allow for a computationally efficient representation of the human body.

Skeletal features may refer to measurable attributes and characteristics derived from the key points of an individual's skeletal structure. These features may include information about joint positions, limb lengths, angles formed by connected joints, proportions between body segments, and/or movement patterns such as musculoskeletal movement pattern. In addition, skeletal features may include higher-order representations such as the symmetry of limbs, dynamic behaviors (e.g., stride length during walking), or structural invariants like height and body volume. These features may be used for distinguishing individual persons, as they are relatively invariant to changes in clothing, lighting, or background.

In various aspects described herein, an extraction of skeletal features, whether it is performed by the autonomous machines 420 (i.e. the one or more processors 102) or the device 400 (i.e. the processor 401) described herein, may include an identification of key points on the body of the individual person using sensor data, such as 3D point clouds or depth maps. The extraction may involve a use of designated algorithms, such as convolutional neural networks or pose estimation models, to analyze the sensor data to detect and map the key points. The corresponding processor (e.g. the one or more processor 102 or the processor 401) may determine (e.g. quantify) the spatial and temporal relationships between these key points and obtain the skeletal features.

In an example, the processor 401 may instruct at least one deployed autonomous machine to perform an action associated with the identified individual. Actions may include tracking the individual, navigating to their location, or providing real-time updates on their position within the environment. The device 400 may communicate instructions of the processor 401 via the interface 403 using wireless protocols or a centralized control server.

In some examples, the processor 401 may dynamically assign tasks to autonomous machines 420 based on factors such as their proximity to the individual, available resources, and current workload. For example, if one autonomous machine detects an individual person but is not optimally positioned for tracking, the processor 401 may pass the task to a closer machine. This coordination may involve real-time updates to a shared global map, ensuring seamless collaboration among autonomous machines 420. Through the interaction between the instruction and the identification, autonomous machines 420 may respond effectively to identified individual persons, which may result in enhancing system efficiency and reliability.

For an illustrative example, the device 400 may be deployed within a warehouse to track and identify workers for operational efficiency. The interface 403 may receive data from multiple autonomous machines 420 equipped with 3D cameras, capturing skeletal features of individual persons navigating the warehouse. The processor 401 may identify specific workers based on their skeletal data and direct machines to assist with tasks such as inventory transport. Alternatively, in a security application, the device 400 may track and identify unauthorized personnel within a restricted area. The interface 403 may collect data from static and mobile sensors, while the processor 401 analyzes skeletal features to detect and identify intruders. Autonomous machines 420 may then be instructed to follow or intercept the identified individual persons.

In an example, the data received by the interface 403 may include three-dimensional skeletal features of individual persons. These features may represent joint positions and limb lengths, which the processor 401 may determine by analyzing sensor data captured from multiple perspectives of multiple autonomous machines 420. The processor 401 may use depth information, point clouds, or other three-dimensional data formats to identify anatomical landmarks, such as joints, and calculate spatial relationships between anatomical landmarks. For instance, the processor 401 may determine the length of limbs by computing the Euclidean distance between connected joints identified as key points. The processor 401 may implement algorithms such as convolutional neural networks or pose estimation models, which may analyze three-dimensional data to accurately map skeletal key points. These algorithms may operate in real-time to ensure efficient processing even in dynamic environments.

The processor 401 may implement sensor data fusion by integrating data streams from multiple autonomous machines 420 equipped with corresponding sensors, received from the interface 403, to generate a representation of the detection environment. The processor 401 may implement any known methods to perform the data fusion. Illustratively, the processor 401 may preprocess received data from the interface 403 to standardize formats and eliminate noise. For example, the processor 401 may filter received sensor data to remove outliers or artifacts caused by environmental factors. Furthermore, the processor 401 may align data from different sensors using coordinate transformation techniques based on further information received from the autonomous machines 420 via the interface 403. The further information may include location of autonomous machines 420 and/or field of views of their sensors. This alignment may account for variations in sensor positions, orientations, and intrinsic properties. The processor 401 may synchronize data streams temporally to ensure that skeletal features represented by the sensor data correspond to the same point in time. This may involve timestamping data and correcting for latency. The processor 401 may combine aligned and synchronized data into a unified three-dimensional model, using techniques such as voxelization or point cloud stitching.

The processor 401 may construct, illustratively by implementing the sensor data fusion, a three-dimensional representation of the environment including skeletal features of the individual persons detected in the environment, which may be captured by multiple field of views of multiple autonomous machines 420 in the environment. Based on determined skeletal features associated with an individual person in the environment, the processor 401 may use those skeletal features for comparison against reference skeletal data to identify the individual person as an identified individual. The comparison may include comparing the determined skeletal features, such as joint positions and limb lengths, with reference skeletal features (e.g. reference joint positions and limb lengths) represented by the reference skeletal data of previously identified individual persons.

For example, the processor 401 may assign a likelihood score to the identification of at least one individual person detected in the environment by comparing joint positions and limb lengths of the determined skeletal features to reference skeletal data. Illustratively, for the detected individual, the processor 401 may calculate a respective likelihood score for each previously identified individual person based on reference skeletal features (e.g. reference joint positions and limb lengths) indicated for each previously identified individual person indicated by the reference skeletal data. The likelihood may be calculated using similarity metrics, such as mean squared error or cosine similarity, between the detected features and corresponding data in the reference database. For instance, the processor 401 may evaluate how closely the detected skeletal features match a stored template and assign a probability score representing the confidence of the match. In an example, the processor 401 may implement artificial intelligence and/or machine learning (AI/ML) models for such a classification. An AI/ML unit described herein may implement the AI/ML model. Illustratively, machine learning classifiers trained on reference skeletal data, which may include variability for different poses and movements.

In an example, the data received by the interface 403 may include musculoskeletal movement pattern (e.g. gait) characteristics of individual persons. These characteristics may describe dynamic behaviors, such as musculoskeletal movement pattern, limb motion, or specific gestures, captured over a period of time. The processor 401 may analyze these movement patterns by extracting temporal features from the received data and comparing them to reference skeletal data including reference musculoskeletal patterns of previously identified individual persons. The processor 401 may implement any known temporal analysis models, such as recurrent neural networks or other sequence-based machine learning algorithms, to evaluate the progression of movement patterns. An AI/ML unit as described herein may implement the temporal analysis model. For instance, the processor 401 may detect recurring motions, such as the rhythmic movement of legs during walking, and calculate parameters like stride length or cadence. For identification, the processor 401 may compare calculated parameters with corresponding reference parameters of previously identified individual persons within the reference skeletal data.

A musculoskeletal movement pattern may refer to the dynamic behaviors exhibited by the skeletal structure of an individual person during motion. This pattern may include information on how joints, limbs, and other skeletal components move relative to one another over a period of time. The pattern may represent both macro-level movements, such as walking, running, or gesturing, and micro-level adjustments, such as subtle shifts in posture or limb alignment. The musculoskeletal movement pattern may include information representing at least one or a combination of: i) joint trajectories representing the path that joints follow during movement, which may be described by spatial coordinates over time; ii) angular dynamics, which may include the angles between connected skeletal components, such as elbows or knees, and how these angles change during movement; iii) symmetry, which may include patterns in movement symmetry between limbs, such as left and right arm motion; iv) rhythm and cadence, which may include temporal characteristics, such as the timing of steps during walking; and v) force dynamics, which may include indicators of exertion, derived from limb acceleration or stride length. These attributes may provide insights into an individual's unique movement signature.

In an example, the processor 401 may use musculoskeletal movement pattern characteristics to distinguish between individual persons with similar skeletal structures. This process may involve identifying unique movement signatures, such as variations in musculoskeletal movement pattern characteristics or specific postural adjustments, which may differentiate individual persons. For example, the processor 401 may analyze the symmetry of limb movement or identify subtle discrepancies in joint articulation during walking. The processor 401 may implement clustering algorithms to group individual persons based on similarities in skeletal structure and movement patterns. The processor 401 may then refine the clusters using classification techniques to assign unique identifiers to individual persons. For this purpose, the processor 401 may integrate static skeletal data with dynamic movement analysis and estimate movements based on external factors, such as uneven terrain. Correspondingly,
musculoskeletal patterns may be provided as an additional layer of identification.

In an example, the data received by the interface 403 may include positional data of individual persons within local coordinate systems of the deployed autonomous machines 420. The processor 401 may transform this positional data into a common coordinate system by applying coordinate transformation techniques, such as translation, rotation, and scaling, to align the local data with a global reference frame. For example, the processor 401 may provide such transformation as a part of the sensor data fusion operation to align relative positions and orientations of the autonomous machines 420, as well as environmental landmarks.

FIG. 5 shows an example of a flow diagram in accordance with various aspects described herein. Illustratively, the system described in accordance with FIG. 4 may implement aspects described for the flow diagram. These blocks may describe how the device 400 including the processor 401 and the autonomous machines 420 may interact to facilitate person detection, identification, tracking, and/or task execution in a dynamic detection environment, illustratively by employing various capabilities such as multi-camera integration, collaborative map-building, and gesture-based interaction for autonomous operations.

In 501, the system may generate reference skeletal data. For example, the processor 401 may initiate a scanning operation to capture skeletal features and other identifying characteristics of individual persons. The processor 401 may instruct autonomous machines 420 to utilize multiple cameras mounted on autonomous machines 420 to scan individual persons from various perspectives and extract skeletal features, such as at least one or a combination of: joint positions and limb lengths, a three-dimensional skeletal representation, body proportions, and other physical characteristics. These features may then be stored as the reference skeletal data to support future identification tasks associated with that individual. Based on a designated use case, the processor 401 or a processor (e.g. the one or more processors 102) of the autonomous machines 420 may perform the extraction based on the detections of the corresponding sensors (e.g. one or a combination of an RGB camera, a two dimensional camera, a three-dimensional camera, etc.).

For example, the processor 401 may initiate a scanning operation where individual persons are scanned using multiple cameras mounted on autonomous machines. The processor 401 may generate information representing scanning tasks and send them to one or more autonomous machines 420 deployed in the environment. In an example, the scanning operation may take in place in a designated portion of the environment specifically to scan individual persons to obtain their reference skeletal data.

One or more autonomous machines 420 may perform the pre-scan of the person of interest (i.e. a selected individual) to obtain the reference skeletal data of the individual person in time from multiple field of views of their sensors (e.g. cameras). In some examples, the extraction of skeletal features may include a learning operation for an AI/ML model. For this extraction with respect to the pre-scan, the corresponding AI/ML unit that extracts the skeletal features for the generation of the reference skeletal data may employ deep learning techniques. Unlike classical machine learning, deep learning techniques may learn the skeletal features without explicitly identifying the features. For example, the AI/ML unit may obtain a person classifier (i.e. each pre-scanned individual person being a respective class) with few-shot learning or fine-tuning. In an example, the one or more autonomous machines 420 may further send information representing the location of the scanned individual, as seen from their perspectives, which the processor 401 may store this information into the memory 402 to maximize the detection capabilities.

The system may perform block 501 for each individual person that is designated (e.g. authorized, expected, entered, etc.) to be present within the environment. Correspondingly, the reference skeletal data may include reference skeletal features of multiple individual persons in a manner that each individual person is mappable to one or more reference skeletal features obtained in a scanning operation of that individual.

Illustratively, the processor 401 may extract reference skeletal features, such as joint positions, limb lengths, body proportions, and other physical characteristics, from the captured data. The processor may then generate an instruction to store the extracted features in the memory 402 as part of the reference skeletal data. The processor 401 may utilize the interface 403 to communicate with the cameras and sensors mounted on the autonomous machines 420. During the scanning operation, the autonomous machines 420 may be instructed to position themselves to capture the individual person from multiple perspectives. The processor 401 may analyze the sensor data using machine learning algorithms, such as convolutional neural networks, to detect and map skeletal key points. In an example, extracted data may be fused to create accurate 3D skeletal models, which may include information about joint positions, limb angles, and body dimensions. This reference skeletal data may be stored in memory 402 for future use in individual person identification. The processor 401 may coordinate sensor inputs, execute feature extraction algorithms, and issue instructions to store reference skeletal data. For instance, the processor 401 may perform temporal alignment of data captured from multiple sensors to ensure consistency and precision in skeletal modeling.

In 502, the system may obtain sensor data by autonomous machines 420. This sensor data may include, for example, RGB images, depth maps, 3D point clouds, or pre-processed skeletal features. In an example, the autonomous machines 420 may collect such sensor data for their operations as described herein, illustratively for their task performance. Autonomous machines 420 may further send sensor data (e.g. raw sensor data, extracted features, etc.) to the device 400. The processor 401 may synchronize, spatially and/or temporally, multiple sensor data items received from the autonomous machines 420 deployed in the environment to generate a map of the environment. Illustratively, the processor 401 may apply sensor fusion techniques. The processor 401 may further maintain the map dynamically through updating the generated map based on further sensor data items received from the autonomous machines 420. Correspondingly, the processor 401 and/or the autonomous machines 420 may use this dynamic map data for their operations. The map data may represent any type of detections performed within the environment and may further include any type of information necessitated through designated operations.

Illustratively, the map data may include multiple layers. For example, in a first layer, the map data may include environmental structure layer, such as three-dimensional spatial geometry of the environment derived from point clouds and depth maps, structural elements including walls, floors, ceilings, and static obstacles, volumetric occupancy information indicating free space and occupied regions. In a further layer, the map data may include a dynamic object layer, which may also include information about individual persons present in the environment, such as real-time positions and trajectories of moving objects, object classification and semantic labeling, temporal tracking data for dynamic obstacle avoidance. In another layer, the map data may include a semantic information layer, such as task-relevant zones and operational boundaries, designated work areas and restricted zones, safety corridors and emergency paths. In an example, any one or a combination of such information may be provided in a single layer.

The map data may include further information, such as information about sensor coverage, signal strength distributions, uncertainty maps or zones. The map data may further include information about operational parameters, such as task-related annotations (e.g. routes, waypoints, designated workspaces, etc.), system related parameters (e.g. network connectivity, point of interest locations (battery charging stations, maintenance zones, etc.)). As the device 400 continuously receive sensor data of multiple autonomous machines, in which the sensor data may alternatively or additionally include any type of sensors, including static sensors or other mobile sensors that are not equipped by autonomous machines, the processor 401 may apply sensor fusion techniques to update the map data for the current representation of the environment.

The processor 401 may aggregate positional data and skeletal features received via the interface 403 from autonomous machines 420. The processor 401 may implement any type of mapping algorithms, in which the processor 401 may plot the detected individual persons' positions onto a global map. The processor 401 may further update the map data in real time as new data is received, ensuring accuracy in tracking and situational awareness.

In 503, the system may perform individual person identification. It is to be noted that at an operational stage, the system may have identified some of the individual persons present in the environment, while other individual persons present in the environment may not have been identified. The processor 401 may detect, based on the data received from the interface 403 and/or based on the map data, an unidentified individual person within the environment. In some examples, an unidentified individual person may correspond to a mere detection of an individual person within the environment without any identifiable or distinguishing information. In some examples, an unidentified individual person may include a temporarily identified individual person or an individual person who has been identified with a lower certainty score. In an example, an unidentified individual person may correspond to an individual, whether previously identified or not, that has not been identified yet for this execution of the identification.

In accordance with various aspects described herein, the processor 401 may identify individual persons based on their skeletal features obtained through the sensors of the autonomous machines 420 and the reference skeletal data. The processor 401 may identify the individual persons based on other type of information as well that is known in any methods, illustratively through extraction of non-skeletal features, such as facial recognition, behavior recognition, pattern recognition, etc. In some examples, aspects described herein with respect to skeletal features may compliment to those person identification methods. In one example, the identification may further include determining height, width, and three dimensional volume of an individual person based on the sensor data and comparing them with reference data including height, width, and three dimensional volume of previously identified individual persons in reference data. In accordance with various aspects described herein, the identification of individual persons may involve classification, tracking, and verification of individual persons based on skeletal and musculoskeletal movement pattern characteristics.

Illustratively, the processor 401 may classify detected individual persons. For this purpose, the processor 401 may employ the AI/ML unit to use machine learning algorithms to assign detected individual persons to predefined classes. The processor 401 may match skeletal features, illustratively by comparing live skeletal data (i.e. skeletal features indicated by the sensor data) with stored reference skeletal data to identify individual persons. Furthermore, the processor 401 may track movement based on the map data to correlate continuous positional updates with skeletal features to monitor individual person trajectories.

For example, the processor 401 may use algorithms trained with supervised learning to classify individual persons based on their skeletal features. During operation, live skeletal features captured by the autonomous machines 420 may be compared with reference data to determine the best match. This comparison may involve identifying unique skeletal attributes such as limb proportions, joint configurations, or musculoskeletal movement pattern patterns. The classification process may assign a probability score to each match, enabling the system to handle uncertain cases effectively.

In an example, the processor 401 may identify at least one individual person within the environment by classifying that individual, for example, who has been detected as unidentified individual, into a plurality of individual person classes based on at least the skeletal features of the at least one individual. Illustratively, each individual person class may correspond to a previously identified individual person (e.g. through the generation of the skeletal data in 501), who may be associated with their own respective reference skeletal data. The processor 501 may compare the respective reference skeletal data of each previously identified individual person with the skeletal features indicated by the received sensor data and classify the at least one individual person to one of the individual person classes. For example, the processor 401 may classify when the respective reference skeletal data matches the skeletal features indicated by the received sensor data. In an example, the processor 401 may calculate a matching score for each individual person class and classify the at least one individual person into an individual person class having the best matching score (e.g. the highest matching score representing the most similar).

It is to be noted that through integration of multiple sensors (e.g. RGB/2D/3D cameras) mounted on autonomous machines 420 to capture and analyze 3D skeletal data, musculoskeletal movement pattern, volume, and textures of individual persons, the system may enable real-time identification and tracking on a collaborative global map as illustratively described as the map data. Upon instruction, the autonomous machines can collectively navigate to locate and approach the identified person. The collaborative nature of the autonomous machines and the comprehensive 3D analysis can improve accuracy in person identification and location.

Once an individual person is identified, even temporarily or with an undesired certainty, the processor 401 may aggregate positional data and skeletal features received via the interface 403 from autonomous machines 420 and associate them with the identified individual. Correspondingly, the device 400 and the autonomous machines 420 may, at this stage, have information that distinguishes this identified individual person from other individual persons. In an example, the processor 401 may assign unique identifiers to each detected individual person based on skeletal features and musculoskeletal movement patterns. These identifiers may be used to distinguish individual persons within the detection environment map.

In an example, the processor 401 may detect an unidentified individual person based on the map data and instruct at least one autonomous machine 420 to monitor the unidentified individual person to obtain more sensor data representative of their skeletal features of the unidentified individual. Illustratively, the processor 401 may issue a task to the at least one autonomous machine 420 to monitor the unidentified individual. Based on sensor data received from the at least one autonomous machine 420, the processor 401 may perform the identification of the individual. Through this targeted approach of instructing the autonomous machines to monitor unidentified individual persons, the system may update the map data efficiently for the representation of the environment.

In an example, the processor 401 may track the movement of individual persons by correlating changes in positional data with updated skeletal features detected over time. The processor 401 may utilize temporal data association techniques to match positional updates with previously detected skeletal features. This utilization may include predicting future positions based on movement patterns and verifying these predictions with new sensor data. The tracking data may be integrated into the detection environment map to provide a comprehensive view of all detected individual persons.

In 504, the system may instruct autonomous machines 420 based on the identifications. For example, the processor 401 may instruct an autonomous machine to interact with an identified individual. The presence or need of the interaction may be based on one or more tasks assigned to autonomous machines, operational necessities, or based on an input of an operator. For example, the processor 401 may instruct at least one autonomous machine to navigate towards the identified individual person based on a location of the at least one deployed autonomous machine within the map and to capture further identification data from the individual. The processor 401 may calculate optimal navigation paths using the map data and issue instructions to the autonomous machine via the interface 403. Upon reaching the target, the autonomous machine 420 may activate additional sensors to capture detailed identification data, such as high-resolution images or biometric information. This data may be relayed back to the processor for further analysis.

Illustratively, operators can query the device 400 for a specific person and assign them to a specific autonomous to find and interact with the individual person identified as that specific person. The processor 401 may check the map data to obtain the current location of the individual person and instruct a respective autonomous machine to interact with the individual. In some examples, the nature of the interaction may include monitoring to increase the certainty of the identification or identify the individual person accurately (e.g. if they are temporarily identified). In an example, through the interaction with the individual, the autonomous machine 420 (e.g. its processor) may detect predefined gestures, such as gestures indicating an instruction, like "follow me", "stop", "go", and generate a task to perform this instruction. In an example, the autonomous machine 420 may send corresponding sensor data to the device 400 and the processor 401 may analyze skeletal features and movement patterns to recognize predefined gestures. This analysis may involve detecting specific configurations of skeletal key points associated with gestures. Once a gesture is detected, the processor 401 may generate instructions for the autonomous machines to execute corresponding actions, such as stopping or following the individual.

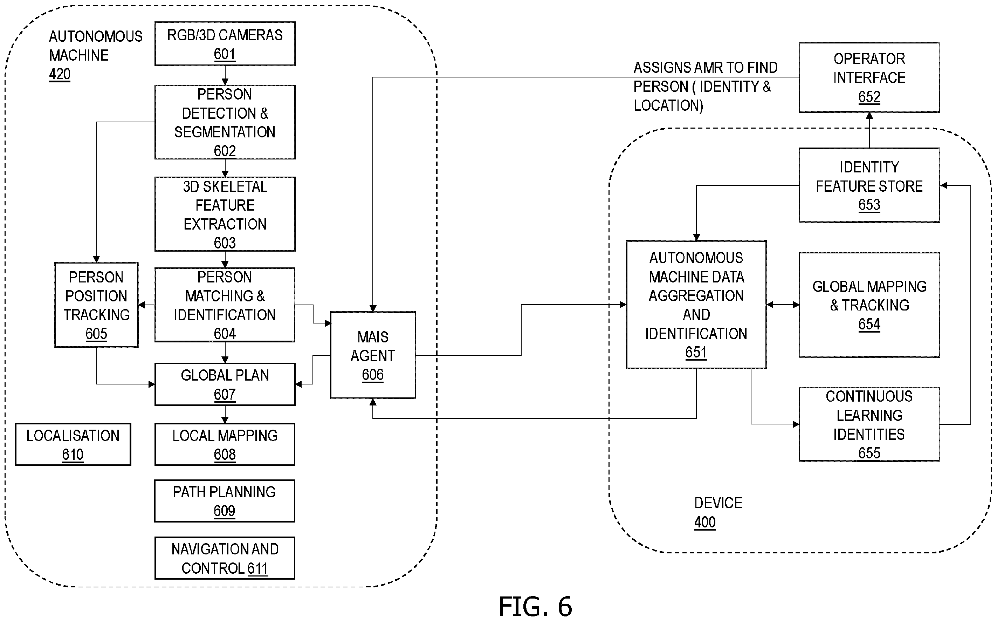

FIG. 6 shows illustrates a block representation of a system in accordance with various aspects described herein. The system may include a central device (e.g. the device 400) and a plurality of autonomous machines including the autonomous machine 420 as an illustrative example. The autonomous machine may include a processor (e.g. the one or more processors 102) and further components as described herein, and the device 400 may include the processor 401 and further components as described herein. The system may further include an operator interface 652. It is to be noted that blocks may represent various operations performed by the respective entities. Although aspects described herein may exemplify the operation for a single autonomous machine, each deployed autonomous machine within the environment may operate similar or identical to the autonomous machine 420.

In an example, the autonomous machine may include sensors 601 (e.g. visual sensors) mounted on the autonomous machine as data acquisition devices (e.g. the data acquisition devices 112). The autonomous machine 420 may include one or more visual sensors configured to monitor respective skeletal features, musculoskeletal movement pattern characteristics, and one or more further sensors for tracking positional data of the individual persons within the detection environment. Illustratively, they may include RGB or 3D cameras. These cameras may capture high-resolution visual and depth data to monitor the environment within a (e.g. 360-degree) field of view. The cameras may operate to detect individual persons, objects, and their respective movements within the deployment environment. The processor of the autonomous machine (which may be referred to as "the AM processor" herein) may process the sensor data to extract skeletal features, musculoskeletal movement patterns, and positional data to enable real-time monitoring and facilitates downstream processes such as person identification and tracking.

The AM processor may implement a person detection and segmentation 602. In an example, person detection and segmentation may refer to the application of machine learning and computer vision techniques to segment human-like shapes from the visual data. This block may use algorithms, including neural networks, to detect human-like shapes and movements. Illustratively, the AM processor may apply heuristics to detect such a shape within a segmented point cloud. The AM processor may identify human presence based on data received from sensors of the autonomous machine, separate human-like shapes from the background, and generate segmentation masks for each detected individual. The AM processor may process raw point cloud data or RGB inputs to isolate regions of interest corresponding to individual persons.

The AM processor may extract three-dimensional skeletal features 603, which may include joint positions, limb lengths, body proportions, and musculoskeletal movement pattern characteristics. The AM processor may identify the skeletal key points by analyzing spatial relationships within the segmented data, such as analyzing the movement patters of the detected shape over time. In some examples, the AM processor may calculates pose estimations and body orientations, generates feature vectors for unique identification, while maintaining temporal consistency of skeletal tracking.

The AM processor may further perform person matching and identification 604. In an example, the AM processor may compare extracted skeletal features against a reference data stored in the memory of the autonomous machine for a preliminary identification or distinction among individual persons that may be detected by the autonomous machine within the same time period. To handle multiple people in the same scene in terms of temporal tracking of each individual, the AM processor may associate new feature clusters with existing ones to track individual persons across successive frames using temporal and spatial data association techniques. The AM processor may classify individual persons into distinct identity groups using clustering algorithms, supervised learning, or few-shot learning models.

Furthermore, the AM processor may perform person position tracking 605 to identify and monitor the location of the detected individual persons based on their sensor data. For example, the AM processor may determine a respective location for each detected individual person within field of view of its sensors. The AM processor may employ temporal and spatial association techniques to maintain the tracking to continuously monitor individual persons' locations, even when they move between autonomous machines' fields of view. The AM processor may update the locations as the individual person moves across the scene. In an example, the AM processor may transform the location of the individual person into a global position, illustratively within the same reference coordinate system with the device 400 (e.g. the common coordinate system).

The AM processor may further perform various operations associated with the operation and task performance of the autonomous machine 420. For example, the AM processor may perform global plan 607 to coordinate strategy used by the autonomous machine to cover the environment efficiently in collaboration with other autonomous machines and may dynamically allocate navigation tasks. The AM processor may further perform local mapping 608 including generating localized representations of the environment for the movement and the task performance. The AM processor may further perform path planning 609 for dynamic route generation, obstacle avoidance, path optimization etc. The AM processor may further implement localization 810 through sensor-fusion-based location estimation by its own sensors, environmental feature matching, etc. The AM processor 810 may perform execution of movement commands with the implementation of navigation and control 811.

Furthermore, the AM processor may implement a matching and identification system agent (MAIS agent) 606. The MAIS agent may include aspects with respect to the communication with the device 400 in terms of skeletal features and skeletal feature identification. Illustratively, the AM processor may encode information representing the sensor data for a transmission to the device 400. The encoded information may include raw sensor data. The encoded information may additionally or alternatively include information representing skeletal features of detected individual persons and positional information. From the perspective of the device, the skeletal features may be considered as partial skeletal data, as the processor 401 may aggregate partial skeletal data of the same individual person received from multiple autonomous devices to determine the skeletal features of the individual. Furthermore, through the MAIS agent operation, the AM processor may access the map data of the device 400, in particular information within the map data that relates to the identification of the individual. Furthermore, the AM processor may, through the MAIS agent operation, receive instructions associated with the identification of the individual, or actions to interact with the individual. The AM processor may further receive instructions from the operator interface, such as tasks assigning the autonomous machine to find a person.

The device 400 may implement aspects described herein as operations of the MAIS, illustratively including the reference skeletal data that may include reference skeletal features, such as three dimensional features, musculoskeletal movement pattern characteristics, and other information associated with previously identified individual persons as reference data. Illustratively, the processor 401 may store and maintain the reference data through identity feature store 653 operation. All MAIS agents in the environment may access this data. Illustratively, the processor 401 may receive real time updates from the MAIS agents about the identified individual's location and movement as a share global map of person who are fully identified, identified with lower probability likelihood and un-identified states. The information can also include errors in the location of the person itself since the actual autonomous machine can move.

The processor 401 may perform autonomous machine data aggregation and identification 651, illustratively as described herein using sensor fusion techniques to aggregate sensor data received from the autonomous machines. In particular, the processor 401 may obtain partial skeletal data of the same individual person (e.g. approximately belonging to the same location) from each of at least two autonomous machines and aggregate the partial skeletal data to obtain the skeletal features of the individual. Correspondingly, the processor 401 may obtain and maintain the map data representing the dynamic deployment environment.

The processor 401 may implement global mapping and tracking 654 to obtain and maintain the map. The device may allow access to the map data by the autonomous machine. The map data may represent a comprehensive view of all the detected individual persons across the autonomous machines deployed in the environment along with associated the key 3D features extracted by each autonomous machine. Based on the persons position and key features the processor 401 may consolidate the positions and 3D fingerprint across all mapping stream from multiple autonomous machines. While the autonomous machine 420 sends its sensor data for the update of the map data, the processor 401 may execute an advanced matching algorithm to generate a probability likelihood of similarity between the extracted features and the profiles of individual persons. If a potential match is found the processor 401 may instruct the autonomous machine 420 to perform additional verification to improve the probability likelihood by matching 3D volume, face feature and texture data to confirm person's identity over multiple frames.

During operation, the processor 401 and the AM processor may use three dimensional skeleton features of individual persons as identifiable properties. After successful identification, the processor 401 may update the location of the identified individual person on the map data. Since, through detections of the autonomous machines within the environment, the map data will be updated with probability likelihood of the person detected, over time the map data may be iteratively updated with position and identity of individual persons. Through all AI/ML exemplified operations described for the autonomous machine 420 or the device 400, the system can learn from each identification event updating the feature database with added information to improve future identification as the machine learning models are fine tunes with changes in individual's appearance, movement behaviors and musculoskeletal movement pattern.

For example, if the autonomous machine 420 is tasked to approach to an individual person or if the individual person has been captured with a sensor of the autonomous machine even if the autonomous machine 420 is not explicitly tasked for, the autonomous machine 420 may add an extra layer of facial identification to increase the detection accuracy and to serve as a learning for the current features for the future detection of the same person. For this purpose, the AM processor may perform a facial recognition or an additional feature extraction upon navigating to the detected individual.

Through instructions provided by the processor 401 to the autonomous machine 420 or through self-instructions of the autonomous machine 420, the autonomous machine 420 may dynamically adjust its position and orientation based on a field of view instruction to maintain a detection of the identified individual. In some examples, the AM processor may configure communications with other autonomous machines within the environment to collaborate by sharing respective local positional data and skeletal features with other autonomous machines of the plurality of autonomous machines. In an example, the AM processor may receive instructions from the device to navigate to an indicated location within the detection environment. The AM processor may further interact with the identified individual person by performing one or more actions based on detected gestures, wherein the one or more actions comprise at least one of stopping, following, and/or signaling alerts.

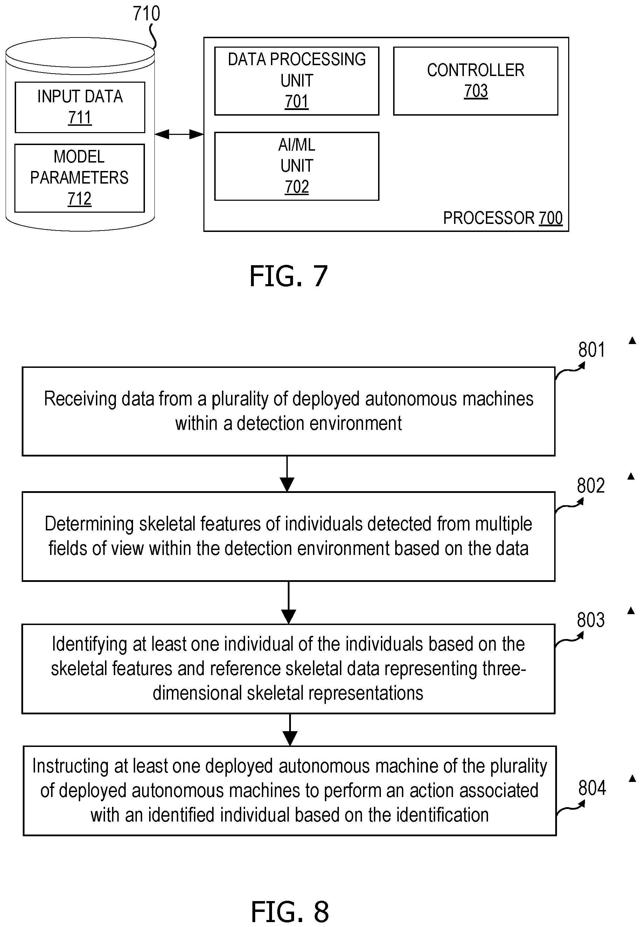

FIG. 7 shows schematically an example of a processor and a memory to implement an AI/ML in accordance with various aspects provided herein. The processor 700 is depicted to include various functional units that are configured to provide various functions as disclosed herein, associated with the processor 401 or the one or more processor 102. The skilled person would recognize that the depicted functional units are provided to explain various operations that the processor 700 may be configured to perform. Similarly, the memory 710 (e.g. the memory 402) is depicted to include the input data 711 as a block, however, the memory 710 may store the input data 711 in any kind of suitable configuration or mechanism.

The "input data" may refer to or may include the data to be inputted to the AI/ML model in accordance to aspects described herein. For aspects associated with extraction of skeletal features from sensor data, which may be for the purpose of identification of individual person or for the purpose of generating the reference skeletal data, the input data may include sensor data, which includes illustratively visual representation of a field of view detected by corresponding sensor or sensors. In this scenario, the "output data" may refer to skeletal features that may be predefined or predetermined. For aspects associated with identification of the individual persons, the input data may include sensor data, which may include illustratively visual representation of a field of view detected by corresponding sensor or sensors. Additionally, or alternatively, the input data may include extracted skeletal features. In this scenario, the "output data" may refer to an information representing a previously identified individual person indicated by the reference skeletal data.

Furthermore, the AI/ML unit 702 is depicted as it is implemented in the processor 700 only as an example, and any type of AI/ML implementation which may include the implementation of the AI/ML model in an external processor, such as an accelerator, a graphics processing unit (GPU), a neuromorphic chip, or in a cloud computing device, or in an external processing device may also be possible according to any methods.

The processor 700 may include a data processing unit 701 that is configured to process data and obtain input of the AI/ML unit based on the input data 711 as provided in various examples in this disclosure to be stored in the memory 710. In various examples, the input data 711 may include data of not only current but also past information for at least within a period of time in a plurality of instances of time (e.g. as a time-series data).

The data processing unit 701 may implement various preprocessing operations to obtain the input. Such operations may include cleaning the input data 711 by removing outliers, handling of missing parameters, correcting errors or inconsistencies, and such. Operations may further include data normalizations in order to scale the input data 711 to a common range. Operations may further include data transformation including mapping the input data 711 based on predefined mapping operations corresponding to mathematical functions to map one or more data items of the input data 711 to a mapped data time for the purpose of analysis.

The data processing unit 701 may be configured to generate training dataset based on the input data 711. In other words, based output of the AI/ML unit 702 in response to the input of the AI/ML model, the data processing unit 701 may prepare the training data to be used in the training of the AI/ML model. The data processing unit 701 may be configured to apply data fusion techniques to aggregate data. Data fusion may be considered as a process of integrating and combining data, within this context, by combining the input data 711 to obtain a unified dataset.

The data processing unit 701 may further implement feature extraction operations. It is to be considered that the AI/ML model implemented by the AI/ML unit 702 may have certain constraints, some of which may relate to the structure and aspects of the data to be inputted to the AI/ML. The feature extraction operations may include translating (i.e. transforming) the input data 711 into input of the AI/ML model. The feature extraction operations may further include generation of training input data for the training dataset based on the input data 711. In some aspects, the feature extraction operations may be based on model information representing the attributes to be used as the input of the AI/ML model, relative importance or weights of the attributes, etc. The feature extraction operations may include reducing the number of attributes (i.e. data items from the input data 711) to be used, ranking of the attributes, etc. based on the model information.

In some aspects, the input data 711 may include information representative of annotations and/or labels to be used for training. In some aspects, the data processing unit 701 may also assign labels or assign ground truth values for the generated training data for the generation of the training dataset. In some aspects, the data processing unit 701 may further generate annotations for the generation of the training data set. Generation of annotations and/or labels may be according to supervised training inputs, or may be based on unsupervised methods, exemplarily by an implementation of an automatized model to assign the labels and/or the annotations.

It is to be noted that the AI/ML unit 702 may use the training dataset in predefined portions, namely a first portion of the training data set for training, a second portion of the training dataset for validation and a third portion of the training dataset for testing purposes. The AI/ML unit 702 may use the first portion to train the AI/ML model, which may allow the AI/ML to learn the underlying patterns and relationships in the data. The AI/ML unit 702 may use the second portion to evaluate and fine-tune the AI/ML model during the training process, which may help to prevent overfitting and improve generalization. Finally, the AI/ML unit 702 may use the third portion to assess the performance of the trained AI/ML model and provide an unbiased estimate of their accuracy and effectiveness for AI/ML model tasks.

The AI/ML unit 702 may implement one or more AI/ML models. The aspects are provided for one AI/ML but it may also include applications involving more than one AI/ML models. The AI/ML model may be configured to receive the input with certain constraints, features, and formats. Accordingly, the data processing unit 701 may obtain the input of the AI/ML, that is based on the input data 711, to be provided to the AI/ML model to obtain an output of the AI/ML model. In various examples, the data processing unit 701 may provide input data including the input data 711 to the AI/ML model. The input of the AI/ML may model include attributes of the input data 711 associated with a period of time or a plurality of consecutive periods of time. In various examples, the data processing unit 701 may convert the input data 711 to an input format suitable for the AI/ML model (i.e. feature extraction e.g. to input feature vectors) so that the AI/ML model may process the input data 711. It is to be noted that the input of the AI/ML model may naturally include data, though the term input of the AI/ML has been used to distinguish from the term "input data".

The processor 700 may further include a controller 703 to control the AI/ML unit 702. The controller 703 may provide the input to the AI/ML model, or provide the AI/ML unit 702 instructions to obtain the output. The controller 703 may further be configured to perform further operations of the processor 700 in accordance with various aspects of this disclosure.

The AI/ML model may be any type of machine learning model configured to receive the input of the AI/ML model and provide an output as provided in this disclosure. The AI/ML model may stand for the ML-based application provided in the disclosure. The AI/ML model may include any type of machine learning model suitable for the purpose. The AI/ML model may include a decision tree model or a rule-based model suitable for various aspects provided herein. The AI/ML model may include a neural network. The neural network may be any type of artificial neural network. The neural network may include any number of layers, including an input layer to receive the input of the AI/ML model, an output layer to provide the output data. A number of layers may be provided between the input layer and the output layer (e.g. hidden layers). The training of the neural network (e.g., adapting the layers of the neural network, adjusting model parameters 712) may use or may be based on any kind of training principle, such as backpropagation (e.g., using the backpropagation algorithm).

For example, the neural network may be a feed-forward neural network in which the information is transferred from lower layers of the neural network close to the input to higher layers of the neural network close to the output. Each layer may include neurons that receive input from a previous layer and provide an output to a next layer based on certain AI/ML model (e.g. weights) parameters 712 adjusting the input information. In various examples, the neural network may be configured in top-down configuration in which a neuron of a layer provides output to a neuron of a lower layer, which may help to discriminate certain features of an input.

The AI/ML model may include a recurrent neural network in which neurons transfer the information in a configuration in which the neurons may transfer the input information to a neuron of the same layer. Recurrent neural networks (RNNs) may help to identify patterns between a plurality of input sequences, and accordingly, RNNs may be used to identify, in particular, a temporal pattern provided with time-series data and perform estimations based on the identified temporal patterns. In various examples of RNNs, long short-term memory (LSTM) architecture may be implemented. The LSTM networks may be helpful to perform classifications, processing, and estimations using time series data.

An LSTM network may include a network of LSTM cells that may process the attributes provided for an instance of time as input of the AI/ML model, such as attributes provided for the instance of time, and one or more previous outputs of the LSTM that have taken in place in previous instances of time, and accordingly, obtain the output data. The number of the one or more previous inputs may be defined by a window size, and the weights associated with each previous input may be configured separately. The window size may be arranged according to the processing, memory, and time constraints and the input of the AI/ML model. The LSTM network may process the features of the received raw data and determine a label for an attribute for each instance of time according to the features. The output data may include or represent a label associated with the input of the AI/ML model.

In accordance with various aspects, the AI/ML model may include a reinforcement learning model. The reinforcement learning model may be modeled as a Markov decision process (MDP). The MDP may determine an action from an action set based on a previous observation which may be referred to as a state. In a next state, the MDP may determine a reward based on the current state that may be based on current observations and the previous observations associated with previous state. The determined action may influence the probability of the MDP to move into the next state. Accordingly, the MDP may obtain a function that maps the current state to an action to be determined with the purpose of maximizing the rewards. Accordingly, input of the AI/ML model for a reinforcement learning model may include information representing a state, and an output data may include information representing an action.

Reinforcement learning (RL) is a type of machine learning that focuses on training an agent to make decisions by interacting with an environment. The agent learns to perform actions to achieve a goal by receiving feedback in the form of rewards or penalties. As a machine learning model, reinforcement learning models learn from data (in this case, the agent's experiences and interactions with the environment) to adapt their behavior and improve their performance over time. Since machine learning is a subset of AI, reinforcement learning models are also considered AI models, as they aim to perform tasks that require human-like decision-making capabilities.

The AI/ML model may include a convolutional neural network (CNN), which is an example for feed-forward neural networks that may be used for the purpose of this disclosure, in which one or more of the hidden layers of the neural network include one or more convolutional layers that perform convolutions for their received input from a lower layer. The CNNs may be helpful for pattern recognition and classification operations. The CNN may further include pooling layers, fully connected layers, and normalization layers.

The AI/ML model may include a generative neural network. The generative neural network may process input of the AI/ML model in order to generate new sets, hence the output data may include new sets of data according to the purpose of the AI/ML model. In various examples, the AI/ML model may include a generative adversarial network (GAN) model in which a discrimination function is included with the generation function, and while the generation function may generate the data according to model parameters 712 of the generation function and the input of the AI/ML model, the discrimination function may distinguish the data generated by the generation function in terms of data distribution according to model parameters 712 of the discrimination function

The AI/ML model may include a trained AI/ML model (e.g. the model parameters 712 in a memory are already set for the purpose) that is configured to provide the output as provided in various examples in this disclosure based on the input of the AI/ML model and one or more model parameters 712. The trained AI/ML model may be obtained via an online and/or offline training. A training agent may perform various operations with respect to the training at various aspects, including online training, offline training, and optimizations based on the inference results. The AI/ML model may take any suitable form or utilize any suitable technique for training process. For example, the AI/ML model may be trained using supervised learning, semi-supervised learning, unsupervised learning, or reinforcement learning techniques.

For supervised learning, generation of labels and annotations may require domain expertise and an understanding of the specific tasks that the AI/ML is designed to address. For example, a human expert might need to review network logs and performance data to identify contributions to communication resource efficiency, which could then be labeled as positive or negative examples for a congestion prediction model. In some cases, semi-supervised or unsupervised learning techniques can be used to reduce the reliance on labeled data. These approaches may involve clustering, anomaly detection, or other methods that can identify patterns and relationships in the data without explicit ground truth labels.

In supervised learning, the AI/ML model may be obtained using a training dataset including both inputs and corresponding desired outputs (illustratively, input data may be associated with a desired or expected output for that input data). Each training instance may include one or more input data item and a desired output. The training agent may train the AI/ML model based on iterations through training instances and using an objective function to teach the AI/ML model to estimate the output for new inputs (illustratively, for inputs not included in the training set). In semi-supervised learning, a portion of the inputs in the training set may be missing the respective desired outputs (e.g., one or more inputs may not be associated with any desired or expected output).

In unsupervised learning, the model may be built from a training dataset including only inputs and no desired outputs. The unsupervised model may be used to find structure in the data (e.g., grouping or clustering of data points), illustratively, by discovering patterns in the data. Techniques that may be implemented in an unsupervised learning model may include, e.g., self-organizing maps, nearest-neighbor mapping, k-means clustering, and singular value decomposition.

Reinforcement learning models may include positive feedback (also referred to as reward) or negative feedback to improve accuracy. A reinforcement learning model may attempt to maximize one or more objectives/rewards. Techniques that may be implemented in a reinforcement learning model may include, e.g., Q-learning, temporal difference (TD), and deep adversarial networks.

The training agent may adjust the model parameters 712 of the respective model based on outputs and inputs (i.e. output data and input data). The training agent may train the AI/ML model according to the desired outcome. The training agent may provide the training data to the AI/ML model. In various examples, the processor 700 and/or the AI/MI, unit 702 itself may include the training agent, or another entity that may be communicatively coupled to the processor may include the training agent and provide the training data to the device, so that the processor may train the AI/MI, model.

The AI/ML model may include an execution unit and a training unit that may implement the training agent as provided in this disclosure for other examples. In accordance with various examples, the training agent may train the AI/ML model based on a simulated environment that is controlled by the training agent according to similar considerations and constraints of the deployment environment.

The skilled person would immediately recognize that the exemplary AI/ML model disclosed herein is explained that may have many configurations. In an example scenario, for execution of the AI/ML model (i.e. inference), the AI/ML may be configured to provide an output as described in the examples of the output data. For training of the AI/ML model, the training agent may train the AI/ML model by providing training input data of the generated training dataset to the input of the AI/ML. The training agent may adjust model parameters 712 of the AI/ML model based on the output of the AI/MI, model that is mapped according to the training input data, and training output data of the training dataset (e.g. labels, annotations) associated with the provided training input data with an intention to make the output of the AI/ML more accurate. In this constellation, the training input data may include predefined or predetermined data representing examples provided for the input data in different configuration and/or scenarios (e.g. generated with simulations, generated based on past records) and the training output data may include corresponding predefined or predetermined data representing examples provided for the output data, each corresponding to a respective training input data.

Accordingly, the training agent may adjust one or more model parameters 712 based on a calculation including parameters for the output of the AI/ML model for the training input data and the training output data associated with the training input data. In various examples, the calculation may also include one or more parameters of the AI/MI, model. With each iteration with respect to the training input data that may include many data items, which each data item may represent an input of an instance (of time, of observation, etc.) on various aspects and each iteration may iterate a respective data item representing an input of an instance, the training agent may accordingly cause the AI/MI, to provide more accurate output through adjustments made in the model parameters 712.

The processor 700 may implement the training agent, or another entity that may be communicatively coupled to the processor 700 may include the training agent and provide the training input data to the device, so that the processor 700 may train the AI/MI, model. The training agent may be part of the AI/ML unit 702 described herein. Furthermore, the controller 703 may control the AI/ML unit 702 according to a predefined event. For example, the controller 703 may provide instructions to the AI/MI, unit 702 to perform the inference and/or training in response to a received request from another entity. The controller 703 may further obtain output of the AI/ML model from the AI/ML unit 702.

FIG. 10 shows an example of a method. The method may include receiving 801 data from a plurality of deployed autonomous machines within a detection environment; determining 802 skeletal features of individual persons detected from multiple fields of view within the detection environment based on the data; identifying 803 at least one individual person of the individual persons based on the skeletal features and reference skeletal data representing three-dimensional skeletal representations; and instructing at least one deployed autonomous machine of the plurality of deployed autonomous machines to perform an action associated with an identified individual person based on the identification.

The following examples pertain to further aspects of this disclosure.

Example 1 may include the subject matter of a device including: an interface configured to receive data from a plurality of deployed autonomous machines within a detection environment; a processor configured to: determine skeletal features of individual persons detected from multiple fields of view within the detection environment based on the data; identify at least one individual person of the individual persons based on the skeletal features and reference skeletal data representing three-dimensional skeletal representations; instruct at least one deployed autonomous machine of the plurality of deployed autonomous machines to perform an action associated with at least one identified individual person based on the identification.

Example 2 may include the subject matter of example 1, wherein the data received by the interface includes three-dimensional skeletal features of the individual persons, and the processor is configured to determine joint positions and limb lengths of the individual persons based on the three-dimensional skeletal features.

Example 3 may include the subject matter of example 2, wherein the processor is configured to assign a likelihood for the identification of the at least one individual person by comparing the joint positions and limb lengths of the individual persons to the reference skeletal data.

Example 4 may include the subject matter of any one of examples 1 to 3, wherein the data received by the interface includes musculoskeletal movement pattern characteristics of the individual persons, and the processor is configured to analyze movement patterns of the individual persons over time based on reference musculoskeletal movement patterns.

Example 5 may include the subject matter of example 4, wherein the processor is configured to utilize the musculoskeletal movement pattern characteristics of the individual persons to distinguish between the individual persons with similar skeletal structures.

Example 6 may include the subject matter of any one of examples 1 to 5, wherein the data received by the interface includes positional data of the individual persons within local coordinate systems of the plurality of deployed autonomous machines, and the processor is configured to transform the positional data into a common coordinate system.

Example 7 may include the subject matter of any one of examples 1 to 6, wherein the processor is further configured to initiate a scanning operation in which the at least one individual person is scanned with multiple cameras; extract features including reference skeletal features based on the scanning operation; and generate an instruction to store extracted features within the reference skeletal data.

Example 8 may include the subject matter of any one of examples 1 to 7, wherein the at least one individual person is identified by classifying the at least one individual person into a plurality of individual person classes based on at least the skeletal features of the at least one individual.

Example 9 may include the subject matter of any one of examples 1 to 8, wherein the processor is further configured to generate a map of the detection environment, the map including information representing locations of the individual persons detected by the plurality of deployed autonomous machines; wherein the processor is further configured to update the map based on additional data received from the plurality of deployed autonomous machines via the interface.

Example 10 may include the subject matter of example 9, wherein the map includes unique identifiers for each detected individual, the identifiers being assigned based on the skeletal features and musculoskeletal movement pattern characteristics of the individual persons.

Example 11 may include the subject matter of example 9 or 10, wherein the processor is further configured to track the movement of the individual persons within the map by correlating changes in positional data with updated skeletal features detected over time.

Example 12 may include the subject matter of any one of examples 9 to 11, wherein the processor is configured to instruct the at least one deployed autonomous machine to navigate towards the at least one identified individual person based on a location of the at least one deployed autonomous machine within the map and to capture further identification data from the individual.

Example 13 may include the subject matter of any one of examples 9 to 12, wherein the processor is further configured to detect predefined gestures made by the at least one identified individual person and instruct the at least one deployed autonomous machine to perform an action corresponding to the detected gesture.

Example 14 may include the subject matter of a system including: the device of any one of examples 1 to 13; and a plurality of autonomous machines configured to be deployed within a deployment environment.

Example 15 may include the subject matter of example 14, wherein each autonomous machine of the plurality of autonomous machines includes one or more visual sensors configured to monitor respective skeletal features, musculoskeletal movement pattern characteristics, and positional data of the individual persons within the detection environment.

Example 16 may include the subject matter of example 15, wherein each autonomous machine of the plurality of autonomous machines is further configured to process visual data captured by the one or more visual sensors to generate partial skeletal data of the respective autonomous machine and transmit the processed visual data to the device via the interface.

Example 17 may include the subject matter of any one of examples 14 to 16, wherein each autonomous machine of the plurality of autonomous machines is configured to dynamically adjust a position and orientation of the respective autonomous machine based on a field of view instruction to maintain a detection of the at least one identified individual person.

Example 18 may include the subject matter of any one of examples 14 to 17, wherein each autonomous machine of the plurality of autonomous machines are configured to collaborate by sharing respective local positional data and skeletal features with other autonomous machines of the plurality of autonomous machines.

Example 19 may include the subject matter of any one of examples 14 to 18, wherein the plurality of autonomous machines are further configured to receive instructions from the device to navigate to an indicated location within the detection environment.

Example 20 may include the subject matter of any one of examples 14 to 19, wherein the at least one autonomous machine is configured to interact with the at least one identified individual person by performing one or more actions based on detected gestures, wherein the one or more actions include at least one of stopping, following, and/or signaling alerts.

Example 21 may include the subject matter of any one of examples 14 to 20, wherein each autonomous machine of the plurality of autonomous machines is configured to perform a respective facial recognition or an additional feature extraction upon navigating to the detected individual.

Example 22 may include the subject matter of a method including: receiving data from a plurality of deployed autonomous machines within a detection environment; determining skeletal features of individual persons detected from multiple fields of view within the detection environment based on the data; identifying at least one individual person of the individual persons based on the skeletal features and reference skeletal data representing three-dimensional skeletal representations; and instructing at least one deployed autonomous machine of the plurality of deployed autonomous machines to perform an action associated with at least one identified individual person based on the identification.

Example 23 may include the subject matter of example 22, wherein the data received includes three-dimensional skeletal features of the individual persons, and the method further includes determining joint positions and limb lengths of the individual persons based on the three-dimensional skeletal features.

Example 24 may include the subject matter of example 23, may further include assigning a likelihood for the identification of the at least one individual person by comparing the joint positions and limb lengths of the individual persons to the reference skeletal data.

Example 25 may include the subject matter of any one of examples 22 to 24, wherein the data received includes musculoskeletal movement pattern characteristics of the individual persons, and the method further includes analyzing movement patterns of the individual persons over time based on reference musculoskeletal movement patterns.

Example 26 may include the subject matter of example 25, may further include utilizing the musculoskeletal movement pattern characteristics of the individual persons to distinguish between the individual persons with similar skeletal structures.

Example 27 may include the subject matter of any one of examples 22 to 26, wherein the data received includes positional data of the individual persons within local coordinate systems of the plurality of deployed autonomous machines, and the method further includes transforming the positional data into a common coordinate system.

Example 28 may include the subject matter of any one of examples 22 to 27, may further include: initiating a scanning operation in which the at least one individual person is scanned with multiple cameras; extracting features including reference skeletal features based on the scanning operation; and generating an instruction to store the extracted features within the reference skeletal data.

Example 29 may include the subject matter of any one of examples 22 to 28, may further include identifying the at least one individual person by classifying the at least one individual person into a plurality of individual person classes based on at least the skeletal features of the at least one individual.

Example 30 may include the subject matter of any one of examples 22 to 29, may further include: generating a map of the detection environment, the map including information representing locations of the individual persons detected by the plurality of deployed autonomous machines; and updating the map based on additional data received from the plurality of deployed autonomous machines.

Example 31 may include the subject matter of example 30, wherein the map includes unique identifiers for each detected individual, the identifiers being assigned based on the skeletal features and musculoskeletal movement pattern characteristics of the individual persons.

Example 32 may include the subject matter of example 30 or 31, may further include tracking the movement of the individual persons within the map by correlating changes in positional data with updated skeletal features detected over time.

Example 33 may include the subject matter of any one of examples 30 to 32, may further include instructing at least one deployed autonomous machine to navigate towards the at least one identified individual person based on a location of the at least one deployed autonomous machine within the map and to capture further identification data from the individual.

Example 34 may include the subject matter of any one of examples 30 to 33, may further include detecting predefined gestures made by the at least one identified individual person and instructing at least one deployed autonomous machine to perform an action corresponding to the detected gesture.

Example 35 may include the subject matter of any one of examples 22 to 34, may further include: deploying a plurality of autonomous machines configured to operate within a detection environment.

Example 36 may include the subject matter of example 35, may further include configuring each autonomous machine of the plurality of autonomous machines to monitor respective skeletal features, musculoskeletal movement pattern characteristics, and positional data of the individual persons within the detection environment using one or more visual sensors.

Example 37 may include the subject matter of example 36, may further include processing visual data captured by the one or more visual sensors to generate partial skeletal data and transmitting the processed visual data to the device.

Example 38 may include the subject matter of any one of examples 35 to 37, may further include dynamically adjusting a position and orientation of the respective autonomous machine based on a field of view instruction to maintain detection of the at least one identified individual.

Example 39 may include the subject matter of any one of examples 35 to 38, may further include collaborating by sharing respective local positional data and skeletal features with other autonomous machines of the plurality of autonomous machines.

Example 40 may include the subject matter of any one of examples 35 to 39, may further include receiving instructions from the device to navigate to an indicated location within the detection environment.

Example 41 may include the subject matter of any one of examples 35 to 40, may further include interacting with the at least one identified individual person by performing one or more actions based on detected gestures, wherein the one or more actions include at least one of stopping, following, and/or signaling alerts.

Example 42 may include the subject matter of any one of examples 35 to 41, may further include performing respective facial recognition or additional feature extraction upon navigating to the detected individual.

Example 43 may include a non-transitory computer-readable medium including instructions which, if executed by a processor, cause the processor to perform the subject matter of any one of examples 22 to 42.

The word "exemplary" is used herein to mean "serving as an example, instance, or illustration". Any embodiment or design described herein as "exemplary" is not necessarily to be construed as preferred or advantageous over other embodiments or designs.

The words "plurality" and "multiple" in the description or the claims expressly refer to a quantity greater than one. The terms "group (of)", "set [of]", "collection (of)", "series (of)", "sequence (of)", "grouping (of)", etc., and the like in the description or in the claims refer to a quantity equal to or greater than one, i.e. one or more. Any term expressed in plural form that does not expressly state "plurality" or "multiple" likewise refers to a quantity equal to or greater than one.

As used herein, "memory" is understood as a non-transitory computer-readable medium in which data or information can be stored for retrieval. References to "memory" included herein may thus be understood as referring to volatile or non-volatile memory, including random access memory ("RAM"), read-only memory ("ROM"), flash memory, solid-state storage, magnetic tape, hard disk drive, optical drive, etc., or any combination thereof. Furthermore, registers, shift registers, processor registers, data buffers, etc., are also embraced herein by the term memory. A single component referred to as "memory" or "a memory" may be composed of more than one different type of memory, and thus may refer to a collective component including one or more types of memory. Any single memory component may be separated into multiple collectively equivalent memory components, and vice versa. Furthermore, while memory may be depicted as separate from one or more other components (such as in the drawings), memory may also be integrated with other components, such as on a common integrated chip or a controller with an embedded memory.

The term "software" refers to any type of executable instruction, including firmware.

In the context of this disclosure, the term "process" may be used, for example, to indicate a method. Illustratively, any process described herein may be implemented as a method (e.g., a channel estimation process may be understood as a channel estimation method). Any process described herein may be implemented as a non-transitory computer readable medium including instructions configured, when executed, to cause one or more processors to carry out the process (e.g., to carry out the method).

Throughout the drawings, it should be noted that like reference numbers are used to depict the same or similar elements, features, and structures, unless otherwise noted. It should be noted that certain components may be omitted for the sake of simplicity. It should be noted that nodes (dots) are provided to identify the circuit line intersections in the drawings including electronic circuit diagrams.

The phrase "at least one" and "one or more" may be understood to include a numerical quantity greater than or equal to one (e.g., one, two, three, four, [...], etc.). The phrase "at least one of" with regard to a group of elements may be used herein to mean at least one element from the group consisting of the elements. For example, the phrase "at least one of" with regard to a group of elements may be used herein to mean a selection of: one of the listed elements, a plurality of one of the listed elements, a plurality of individual listed elements, or a plurality of a multiple of individual listed elements.

The words "plural" and "multiple" in the description and in the claims expressly refer to a quantity greater than one. Accordingly, any phrases explicitly invoking the aforementioned words (e.g., "plural [elements]", "multiple [elements]") referring to a quantity of elements expressly refers to more than one of the said elements. For instance, the phrase "a plurality" may be understood to include a numerical quantity greater than or equal to two (e.g., two, three, four, five, [...], etc.).

As used herein, a signal or information that is "indicative of", "representative", "representing", or "indicating" a value or other information may be a digital or analog signal that encodes or otherwise, communicates the value or other information in a manner that can be decoded by and/or cause a responsive action in a component receiving the signal. The signal may be stored or buffered in computer-readable storage medium prior to its receipt by the receiving component and the receiving component may retrieve the signal from the storage medium. Further, a "value" that is "indicative of "or "representative" some quantity, state, or parameter may be physically embodied as a digital signal, an analog signal, or stored bits that encode or otherwise communicate the value.

As used herein, a signal may be transmitted or conducted through a signal chain in which the signal is processed to change characteristics such as phase, amplitude, frequency, and so on. The signal may be referred to as the same signal even as such characteristics are adapted. In general, so long as a signal continues to encode the same information, the signal may be considered as the same signal. For example, a transmit signal may be considered as referring to the transmit signal in baseband, intermediate, and radio frequencies.

The terms "processor" or "controller" as, for example, used herein may be understood as any kind of technological entity that allows handling of data. The data may be handled according to one or more specific functions executed by the processor. Further, a processor or controller as used herein may be understood as any kind of circuit, e.g., any kind of analog or digital circuit. A processor or a controller may thus be or include an analog circuit, digital circuit, mixed-signal circuit, logic circuit, processor, microprocessor, Central Processing Unit (CPU), Graphics Processing Unit (GPU), Digital Signal Processor (DSP), Field Programmable Gate Array (FPGA), integrated circuit, Application Specific Integrated Circuit (ASIC), etc., or any combination thereof. Any other kind of implementation of the respective functions, which will be described below in further detail, may also be understood as a processor, controller, or logic circuit. It is understood that any two (or more) of the processors, controllers, or logic circuits detailed herein may be realized as a single entity with equivalent functionality or the like, and conversely that any single processor, controller, or logic circuit detailed herein may be realized as two (or more) separate entities with equivalent functionality or the like.

The terms "one or more processors" is intended to refer to a processor or a controller. The one or more processors may include one processor or a plurality of processors. The terms are simply used as an alternative to the "processor" or "controller".

The term "user device" is intended to refer to a device of a user (e.g. occupant) that may be configured to provide information related to the user. The user device may exemplarily include a mobile phone, a smart phone, a wearable device (e.g. smart watch, smart wristband), a computer, etc.

As utilized herein, terms "module", "component," "system," "circuit," "element," "slice," " circuit," and the like are intended to refer to a set of one or more electronic components, a computer-related entity, hardware, software (e.g., in execution), and/or firmware. For example, circuit or a similar term can be a processor, a process running on a processor, a controller, an object, an executable program, a storage device, and/or a computer with a processing device. By way of illustration, an application running on a server and the server can also be circuit. One or more circuits can reside within the same circuit, and circuit can be localized on one computer and/or distributed between two or more computers. A set of elements or a set of other circuits can be described herein, in which the term "set" can be interpreted as "one or more".

The term "data" as used herein may be understood to include information in any suitable analog or digital form, e.g., provided as a file, a portion of a file, a set of files, a signal or stream, a portion of a signal or stream, a set of signals or streams, and the like. Further, the term "data" may also be used to mean a reference to information, e.g., in form of a pointer. The term "data", however, is not limited to the aforementioned examples and may take various forms and represent any information as understood in the art. The term "data item" may include data or a portion of data.

It will be understood that when an element is referred to as being "connected" or "coupled" to another element, it can be physically connected or coupled to the other element such that current and/or electromagnetic radiation (e.g., a signal) can flow along a conductive path formed by the elements. Inherently, such element is connectable or couplable to the another element. Intervening conductive, inductive, or capacitive elements may be present between the element and the other element when the elements are described as being coupled or connected to one another. Further, when coupled or connected to one another, one element may be capable of inducing a voltage or current flow or propagation of an electro-magnetic wave in the other element without physical contact or intervening components. Further, when a voltage, current, or signal is referred to as being "provided" to an element, the voltage, current, or signal may be conducted to the element by way of a physical connection or by way of capacitive, electro-magnetic, or inductive coupling that does not involve a physical connection.

Unless explicitly specified, the term "instance of time" refers to a time of a particular event or situation according to the context. The instance of time may refer to an instantaneous point in time, or to a period of time which the particular event or situation relates to.

Unless explicitly specified, the term "transmit" encompasses both direct (point-to-point) and indirect transmission (via one or more intermediary points). Similarly, the term "receive" encompasses both direct and indirect reception. Furthermore, the terms "transmit," "receive," "communicate," and other similar terms encompass both physical transmission (e.g., the transmission of radio signals) and logical transmission (e.g., the transmission of digital data over a logical software-level connection). For example, a processor or controller may transmit or receive data over a software-level connection with another processor or controller in the form of radio signals, where the physical transmission and reception is handled by radio-layer components such as RF transceivers and antennas, and the logical transmission and reception over the software-level connection is performed by the processors or controllers. The term "communicate" encompasses one or both of transmitting and receiving, i.e., unidirectional or bidirectional communication in one or both of the incoming and outgoing directions. The term "calculate" encompasses both 'direct' calculations via a mathematical expression/formula/relationship and 'indirect' calculations via lookup or hash tables and other array indexing or searching operations.

While the above descriptions and connected figures may depict electronic device components as separate elements, skilled persons will appreciate the various possibilities to combine or integrate discrete elements into a single element. Such may include combining two or more circuits to form a single circuit, mounting two or more circuits onto a common chip or chassis to form an integrated element, executing discrete software components on a common processor core, etc. Conversely, skilled persons will recognize the possibility to separate a single element into two or more discrete elements, such as splitting a single circuit into two or more separate circuits, separating a chip or chassis into discrete elements originally provided thereon, separating a software component into two or more sections and executing each on a separate processor core, etc.

It is appreciated that implementations of methods detailed herein are demonstrative in nature, and are thus understood as capable of being implemented in a corresponding device. Likewise, it is appreciated that implementations of devices detailed herein are understood as capable of being implemented as a corresponding method. It is thus understood that a device corresponding to a method detailed herein may include one or more components configured to perform each aspect of the related method. All acronyms defined in the above description additionally hold in all claims included herein.

## Claims

1. A device comprising:
an interface configured to receive data from a plurality of deployed autonomous machines within a detection environment; and
a processor configured to:
determine skeletal features of individual persons detected from multiple fields of view within the detection environment based on the data;
identify at least one individual person of the individual persons based on the skeletal features and reference skeletal data representing three-dimensional skeletal representations; and
instruct at least one deployed autonomous machine of the plurality of deployed autonomous machines to perform an action associated with the at least one identified individual person based on the identification.

2. The device of claim 1, wherein the data received by the interface comprises three-dimensional skeletal features of the individual persons, and the processor is configured to determine joint positions and limb lengths of the individual persons based on the three-dimensional skeletal features.

3. The device of claim 2, wherein the processor is configured to assign a likelihood for the identification of the at least one individual person by comparing the joint positions and limb lengths of the individual persons to the reference skeletal data.

4. The device of any one of claims 1 to 3, wherein the data received by the interface comprises musculoskeletal movement pattern characteristics of the individual persons, and the processor is configured to analyze movement patterns of the individual persons over time based on reference musculoskeletal movement patterns.

5. The device of claim 4, wherein the processor is configured to utilize the musculoskeletal movement pattern characteristics of the individual persons to distinguish between the individual persons with similar skeletal structures.

6. The device of any one of claims 1 to 5, wherein the data received by the interface comprises positional data of the individual persons within local coordinate systems of the plurality of deployed autonomous machines, and the processor is configured to transform the positional data into a common coordinate system.

7. The device of any one of claims 1 to 6, wherein the processor is further configured to initiate a scanning operation in which the at least one individual person is scanned with multiple cameras;
extract features including reference skeletal features based on the scanning operation; and
generate an instruction to store extracted features within the reference skeletal data.

8. The device of any one of claims 1 to 7, wherein the at least one individual person is identified by classifying the at least one individual person into a plurality of individual classes based on at least the skeletal features of the at least one individual.

9. The device of any one of claims 1 to 8, wherein the processor is further configured to generate a map of the detection environment, the map comprising information representing locations of the individual persons detected by the plurality of deployed autonomous machines; wherein the processor is further configured to update the map based on additional data received from the plurality of deployed autonomous machines via the interface.

10. The device of claim 9, wherein the map comprises unique identifiers for each detected individual person, the identifiers being assigned based on the skeletal features and musculoskeletal movement pattern characteristics of the individual persons.

11. The device of claim 9 or 10, wherein the processor is further configured to track the movement of the individual persons within the map by correlating changes in positional data with updated skeletal features detected over time.

12. The device of any one of claims 9 to 11, wherein the processor is configured to instruct the at least one deployed autonomous machine to navigate towards the at least one identified individual person based on a location of the at least one deployed autonomous machine within the map and to capture further identification data from the individual person.

13. A system comprising:
the device of any one of claims 1 to 12; and
a plurality of autonomous machines configured to be deployed within a deployment environment.

14. The system of claim 13, wherein each autonomous machine of the plurality of autonomous machines is configured to dynamically adjust a position and orientation of the respective autonomous machine based on a field of view instruction to maintain a detection of the at least one identified individual person.

15. A computer-readable medium comprising instructions which, if executed by a processor, cause the processor to:
receive data from a plurality of deployed autonomous machines within a detection environment;
determine skeletal features of individual persons detected from multiple fields of view within the detection environment based on the data;
identify at least one individual person of the individual persons based on the skeletal features and reference skeletal data representing three-dimensional skeletal representations; and
instruct at least one deployed autonomous machine of the plurality of deployed autonomous machines to perform an action associated with the at least one identified individual person based on the identification.
